(19) **Europäisches Patentamt / European Patent Office / Office européen des brevets**

(11) **EP 4 625 890 A2**

(12) **EUROPEAN PATENT APPLICATION**

(43) Date of publication:
01.10.2025   Bulletin 2025/40

(21) Application number: 25191072.5

(22) Date of filing: 13.03.2023

(51) International Patent Classification (IPC):
*H04L 9/40* (2022.01)

(52) Cooperative Patent Classification (CPC):
H04L 63/08; G06F 21/6236; G06Q 20/02;
G06Q 20/20; G06Q 20/204; G06Q 20/322;
G06Q 20/326; G06Q 20/34; G06Q 20/3821;
G06Q 20/401; H04L 63/20; G06F 21/31

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(62) Document number(s) of the earlier application(s) in
accordance with Art. 76 EPC:
23161612.9 / 4 432 141

(71) Applicant: Mastercard International Incorporated
Purchase NY 10577 (US)

(72) Inventor: COLLINGE, Mehdi
7141 Hainaut (BE)

(74) Representative: Keltie LLP
No. 1 London Bridge
London SE1 9BA (GB)

Remarks:
This application was filed on 22-07-2025 as a
divisional application to the application mentioned
under INID code 62.

(54) **CREDENTIAL MANAGEMENT IN A DECENTRALIZED HETEROGENEOUS TRANSACTION SYSTEM**

(57)   Methods of providing a secure service at a computing node for a requesting party external to the computing node are described. One method comprises receiving a service request comprising a request to generate a credential. Service requirements of the requesting party are determined from the service request. The credential is then generated, and any further data needed to meet service requirements of the requesting party is obtained. A credential data format is determined to meet the service requirements and a code value for the credential data format is established. The code value, the credential and the further data are then stored in the credential data format, and a message comprising the credential in the credential data format is sent to the requesting party. Another method comprises receiving a service request comprising a request to validate a credential, wherein the credential is provided in a credential data format. The credential data format is determined from a code value stored in the credential data format. The credential and further data relating to service requirements are extracted from the credential data format, and the credential is validated. A message comprising a validation result is then sent to the requesting party. Apparatus suitable to perform these methods is also described.

FIG. 4

**Description**

Field of Disclosure

The present disclosure relates to credential management in a heterogeneous transaction system.

Background to Disclosure

There are multiple technical challenges with requiring a centralized system to provide services to an exceptionally large number of clients, particularly when these are widely geographically distributed. It is logical to consider distributing the system so that the relevant services can be provided by a set of geographically distributed servers, rather than one central server or data centre.

Such decentralisation may use any suitable architecture using geographically distributed servers - or data centres - to deliver services to clients (this may be public cloud, private cloud, or simply a private distributed system). The architecture may be considered as comprising a number of nodes - when using such a distributed architecture, a node may be an aggregation of a number of computers and may cover more than one data centre with "real-time" connectivity and data sharing within a given node.

Decentralisation may itself be problematic, particularly if different service instances need to relate to each other in some way - for example, if a service needs to establish details of how a past service has been performed. This may require, for example other clients (or other system nodes) need to refer back to the service providing node or otherwise understand how, the service providing node performed that service. In a transaction system - where a credential is typically generated and then validated in the authorisation of a transaction, validation of a credential will typically require such information concerning the generation of the credential.

Credential management of this kind can be particularly challenging when the transaction system is heterogeneous - in particular, where different client entities using different processes may need to use the same decentralised architecture for providing services. A further difficulty here is that in order to use long-established transaction protocols used by an installed base of computer systems, there may be very severe constraints on the amount of data that can be used. It would be desirable to address such concerns efficiently without making fundamental changes that would prevent use of the system by an installed base of computer devices and systems.

Document WO 2022/046330 A1 describes a method of providing a secure service at a computing node. The secure service is for a requesting party external to the computing node.

Document WO 2020/247093 A1 describes a method for a computing node to provide a cryptographic key in response to a service request, the method comprising: establishing a key list, wherein the key list comprises key identifiers for a plurality of keys; receiving a service request and identifying that a key is required in response to the service request; and using a deterministic process from data associated with the service request to allocate one of the key identifiers and hence the key associated with said one of the key identifiers to the service request.

Document WO 2017/004391 A1 describes an apparatus comprising computer-executable instructions stored in the memory of the apparatus which, when executed by the processor of the apparatus, cause the apparatus to perform operations comprising: receiving a first request, from a first application, to create a resource for hosting secured content associated with the first application; determining whether the first application is authorized to create the resource at the apparatus; and if the first application is authorized, hosting the secured content.

Summary of Disclosure

The invention is set out in the appended set of claims. In a first aspect, the disclosure provides a method of providing a secure service at a computing node for a requesting party external to the computing node, the method comprising at the computing node: receiving a service request from a requesting party, wherein the service request comprises a request to generate a credential; determining from the service request service requirements of the requesting party; generating the credential; obtaining any further data to meet service requirements of the requesting party; determining, using a codebook, a credential data format to meet the service requirements and establishing a code value for the credential data format; storing the code value, the credential and the further data in the credential data format, and sending a message comprising the credential in the credential data format to the requesting party.

Using this approach, a common data format can be used to provide information suitable for a variety of service contexts for a variety of clients. The use of a "codebook" to identify a specific data format, with the code for that data format being provided so that the data can be extracted appropriately, allows for a very versatile and future-proof solution without the need for additional messaging bandwidth.

In embodiments, the secure service is generation of a credential for a transaction for use in subsequent authorisation of that transaction.

In a second aspect, the disclosure provides a method of providing a secure service at a computing node for a requesting party external to the computing node, the method comprising at the computing node: receiving a service request from a requesting party, wherein the service request comprises a request to validate a credential, wherein the credential is provided in a credential data format; identifying, using a codebook, the credential data format from a code value stored in the credential data format; extracting the credential and further data relating to service requirements from the credential data format; validating the credential; and sending a messaging comprising a validation result to the requesting party.

This is of course a direct complement to the first aspect of the disclosure. In embodiments, the secure service is validation of a credential for a transaction in authorisation of that transaction.

In the method of either aspect, the credential data format may comprise a header part for routing and determining processing options for the credential, and a main part comprising the credential and data associated with the credential. This header part may have two or more alternative formats, wherein the alternative formats are adapted to include different data, to store the same data in a different form, or both. The main part may have two or more alternative formats, wherein the alternative formats are adapted to include different data, to store the same data in a different form, or both. This credential data format may comprise storing the main part in encrypted form - in such a case, the header part may comprise a decryption checksum for the credential and associated data.

In a third aspect, the disclosure provides computing apparatus comprising network communication means, a memory and a programmed processor, wherein the processor is programmed to enable the computing apparatus to perform the method of either the first aspect, the second aspect, or both.

Description of Specific Embodiments

Specific embodiments of the disclosure are now described, by way of example, with reference to the accompanying drawings, of which:

Figure 1 shows multiple clients interacting with a central server;
Figure 2 shows multiple clients interacting with a distributed computing architecture providing the same services as the central server of Figure 1;
Figure 3 shows operation of a distributed system such as that shown in Figure 2 where distributed nodes create and validate proofs;
Figure 4 shows operation of the distributed system of Figure 3 involving heterogeneous clients and operating according to an embodiment of the disclosure;
Figure 5 shows schematically a distributed transaction architecture using a four-party model;
Figure 6 illustrates elements of a complex distributed system adapted to implement the transaction architecture of Figure 5;
Figure 7 shows schematically an exemplary system for enabling digital transactions in the transaction architecture of Figures 5 and 6;
Figure 8 illustrates schematically an arrangement for a distributed system for digital enablement of transactions;
Figure 9 illustrates a computing node of the arrangement of Figure 8 in more detail;
Figure 10 illustrates elements within the computing node of Figure 9;
Figure 11 indicates transaction flow in relation to operations performed by the node of Figure 9;
Figure 12 indicates use of tokenization in an embodiment of the arrangement of Figures 9 to 11;
Figure 13 indicates an approach to key management used in the arrangement of Figures 8 to 12;
Figure 14 illustrates an exemplary approach to transaction identification;
Figure 15 illustrates an exemplary set of cryptographic mechanisms for use for digitized transactions in the arrangement of Figures 8 to 14;
Figure 16 illustrates a global model of key management with individual modes managed as shown in Figure 13;
Figure 17 illustrates a global model of monitoring associated with the key management model of Figures 13 and 16;
Figure 18 illustrates a UCAF format (UCAF Format 6) particularly suitable for use with an exemplary node of the type shown in Figure 9;
Figure 19 shows different routes that a digital transaction may take, and provides context for embodiments of the disclosure;
Figure 20 provides a UCAF format (UCAF Format 5) used in embodiments of the disclosure;
Figure 21 is a table illustrating code use in an embodiment of the disclosure using the UCAF format of Figure 20;
Figures 22 and 23 illustrate alternative headers for use in embodiments of the disclosure for the UCAF format of Figure 20 for use with clear and encrypted main parts of the UCAF respectively;
Figures 24 and 25 illustrate respectively clear and encrypted main parts for embodiments of the disclosure for the UCAF format of Figure 20 replicating UCAF Formats 0 and 0+;

Figures 26 and 27 illustrate respectively clear and encrypted main parts for embodiments of the disclosure for the UCAF format of Figure 20 replicating UCAF Formats 3 and 3+; and

Figures 28 and 29 illustrate respectively clear and encrypted main parts for embodiments of the disclosure for the UCAF format of Figure 20 in a native UCAF Format 5.

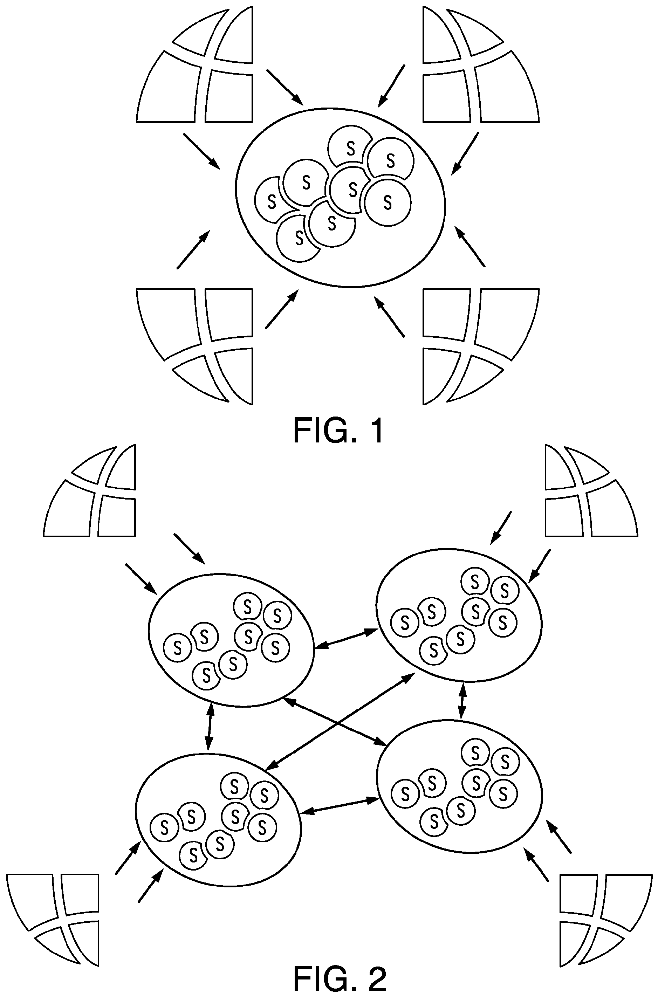

In general terms, the context of the disclosure is illustrated in Figures 1 to 3. Figure 1 shows a central system performing functions in response to requests from a very large number of geographically distributed entities. This places intense demand on the central system in relation to processing capability, storage and messaging, and will typically lead to significant load on the system overall because of bottlenecks and messaging requirements. This is in addition to the problem of network latency resulting from travel time when a request is coming from a geographically distant requester communicating with a centralized system.

Figure 2 shows an alternative arrangement in which the role of the central system is replicated so that the same functions are performed by a distributed set of nodes, each with the capability to perform some or all of the functions provided by the central system. Individual nodes should see a significantly lower demand than the central system, and as entities should be able to interact with a more local node than the central system, there is potential to reduce network latency. However, as discussed above in general terms, and below with specific relevance to a transaction processing system, there are significant technical challenges in achieving this benefit - in particular, there would for straightforward replication be a need to distribute all the same information to all the nodes replicating the centralized system, generally making the overall position worse rather than better.

There are particular difficulties where it is necessary for a second user of the system to be satisfied that an action taken by a first user of the system was legitimate. In the Figure 1 case, this is relatively straightforward - as the service is performed centrally and the central system has all information, then if users trust the central system this is typically not problematic. In the Figure 2 case, the first user may have been interacting with one node and the second user may be interacting with another node, in which case the same level of confidence cannot be achieved unless all necessary information is held in common between all the nodes, suitably synchronized, which would defeat the point of disaggregation when replicating a centralized system. If the product of the first service performed by the first user is valuable information - such as the proof of a payment made by the first user to be used by a second user in completing a transaction - then risks of system failure or compromise by, for example, use of a proof at multiple nodes by multiple second users to complete a relevant transaction, need to be addressed.

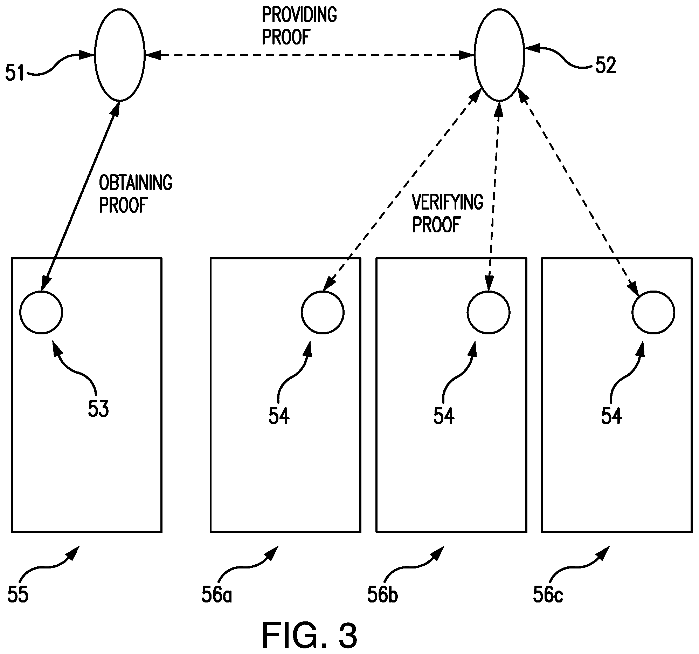

Generally, this situation is shown in Figure 3. A first user 51 requests execution of a first service 53 - in this case, the creation of a credential such as a proof of an event such as a payment from a particular account - and a second user 52 requests validation of the proof of this event, for example to determine that a payment is validly made, from a second service 54. The first user 51 has invoked the first service 53 at a first node 55. The second user will typically not have a choice of where to invoke the second service 54 - this may be a matter of geography or other administrative factors - and in particular may not be able to invoke the second service 54 at the first node 55 (though this may be a possibility). In practice, the second service 54 will then be invoked at a further node 56a, 56b, 56c that has sufficient information to achieve the validation process. Typically, this will involve access to a common set of cryptographic keys together with the minimal set of information required to regenerate the proof or otherwise determine that the proof is correct - as discussed below, in embodiments a limited set of keys may be used. Situations in which such a proof, or an object claiming to be such a proof, is presented to one or more second services at one or more nodes need to be addressed for such a system to function reliably and securely.

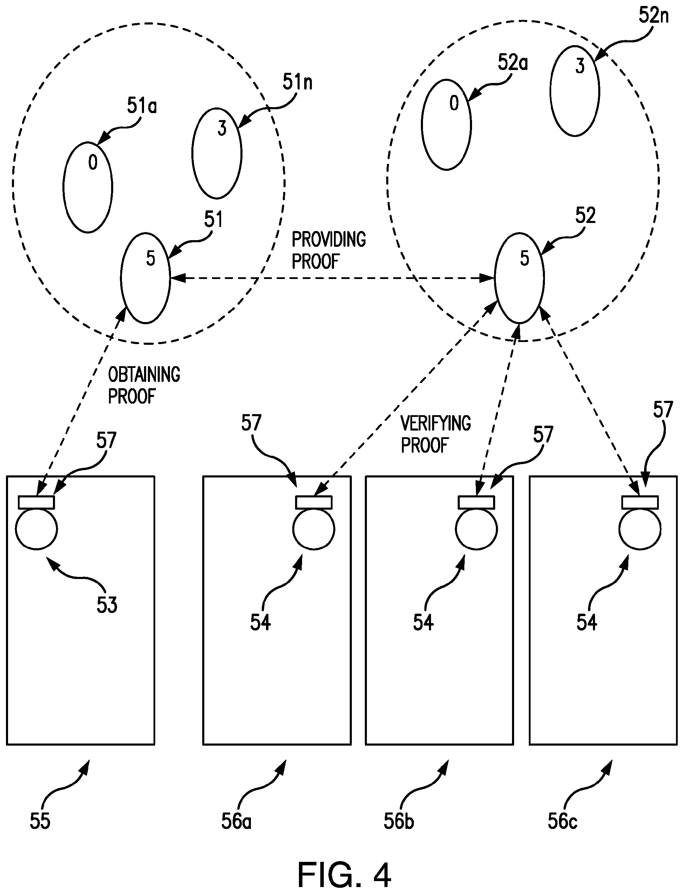

The present disclosure teaches a development upon this approach, shown in Figure 4. The first user 51 and the second user 52 are both users in a larger pool of first users 51a to 51n and a larger pool of second users 52a to 52n respectively. There is heterogeneity in at least one of these two pools, in that users have different capabilities or different service requirements - this is represented in Figure 4 by a version number of service data that can be used by the user - in the example shown, both first user 51 and second user 52 are using version 5 of the service requirements, whereas as can be seen, other users are only capable of supporting other versions. This means that the nature of the proof of the event (in this case, "proof" may include not only a cryptographic credential but also associated service or proof-related data) may need to be different for different users - it may contain different information, or have different service requirements. While the first service 53 and the second service 54 may have the capability to provide these different service requirements and produce and verify proofs with this different information, this provides a challenge for the overall system in that it is strongly desirable for a common data envelope of relatively small size to be used to carry the proof data.

This challenge is addressed by using a part of the proof as an encoding to indicate a service type, with the format of the proof varying dependent on the encoding. In the arrangement shown in Figure 4, this is provided by having a service adaptation process 57 associated with each of the first service 53 and the second service 54. This service adaptation process 57 informs the service of the service requirements of the requesting user, and ensures that an appropriate version of the proof, matching these service requirements, is provided to the requesting user.

In order to achieve this common data envelope, a codebook is used to prepare the service data. The service adaptation process 57 identifies a proof data format required to meet the service requirements of the requesting user, and the first service 53 provides the proof (including any associated data) for provision to the first user 51. A number of different proof data formats - all compatible with the common data envelope - are available, and one of these will be appropriate to the service requirements of the requesting user. The proof will then be formatted - including all service data and proof-related data for the first user service requirements - according to this proof data format, and a code for this proof data format will be included within the proof provided to the first user 51. When the proof later needs to be validated by the second service 54 for the second user 52, the service adaptation process identifies the code in the proof and determines the proof data format of the proof accordingly. The second service 54 can then identify the separate elements of the proof, and can perform validation of the proof.

Using this approach, a common data envelope, and so a common messaging structure, can be used to access the first and second services, allowing multiple client types to use the first and second services. While efficient in itself, this also allows for effective future-proofing of the service provision environment, as evolution of the service requirements of the users can simply be reflected in addition of new codes to the codebook used by the service adaptation process 57. Significant user requirement changes can thus be handled by a software upgrade rather than by any more material change to the nodes 55, 56.

This issue is particularly relevant to transaction processing systems, and in particular to systems for handling digital transactions. The number of digital transactions is increasing extremely rapidly, and it is necessary for them to execute reliably and rapidly.

Support of these transactions can use transaction processing systems developed for device-based payments using payment cards and use the protocols of such payment systems, but in practice such transactions have a different character from device-based transactions. This is discussed below, first by reference to the general elements of a transaction processing system, and then by a more detailed discussion of the infrastructure used to support digital transactions.

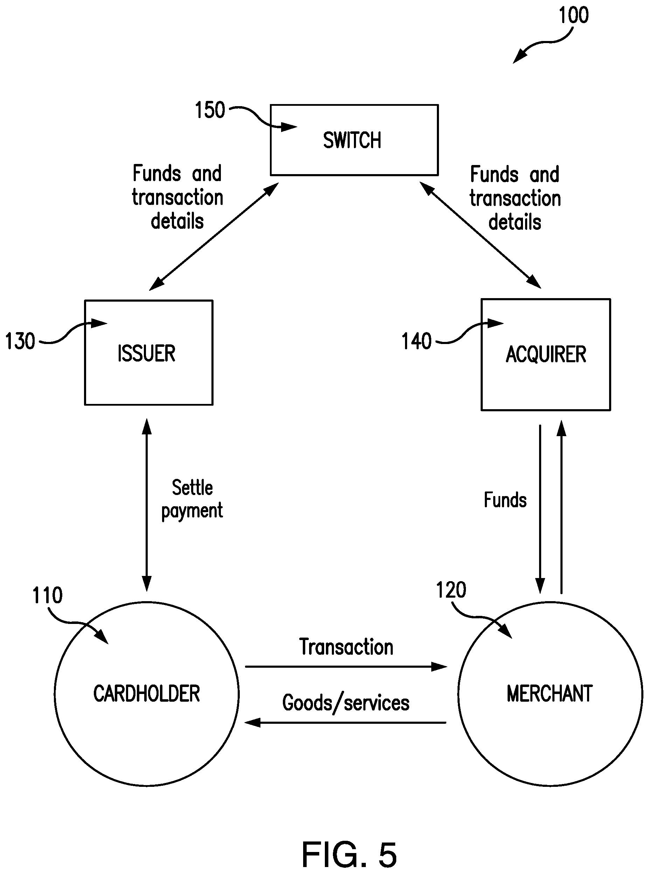

Figure 5 is a block diagram of a typical four-party model or four-party payment transaction scheme. The diagram illustrates the entities present in the model and the interactions occurring between entities operating in a card scheme.

Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 - interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. The cardholder 110 may have provided verification information in the transaction, and in some circumstances may be required to undergo an additional verification process to verify their identity (such as 3-D Secure in the case of an online transaction). Once the additional verification process is complete the transaction is authorised.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

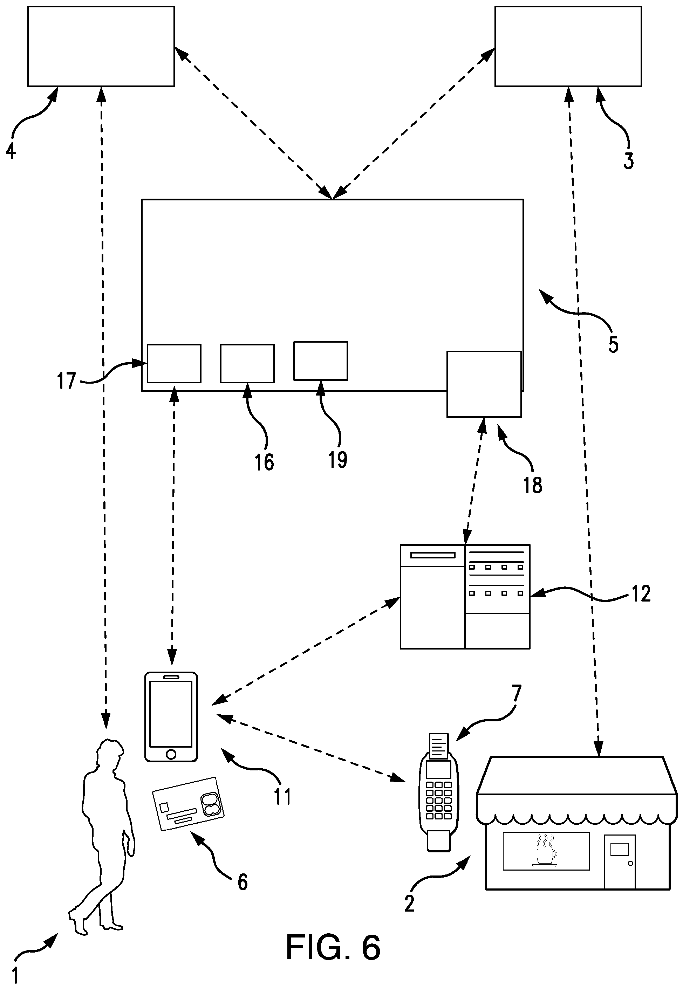

Figure 6 shows an architecture according to an embodiment of the disclosure appropriate for interaction between a cardholder and a merchant. This Figure shows a general-purpose architecture for reference but shows in particular elements of an architecture used when a cardholder carries out an online transaction with a merchant server.

For a conventional transaction, a cardholder will use their payment card 6 - or a mobile computing device such as smartphone 11 adapted for use as a contactless payment device - to transact with a POS terminal 7 of a merchant 2.

However, in embodiments relevant to the present disclosure, the cardholder will use his or her computing device - which may be any or all of a cellular telephone handset, a tablet, a laptop, a static personal computer or any other suitable computing device (here cellular telephone handset or smartphone 11 is shown) - and other computing devices such as a smart watch or other wearable device may also be used) - to act either as a proxy for a physical payment card 6 or as a virtual payment card operating only in a digital domain. The smartphone 11 may achieve this with a mobile payment application and a digital wallet, as described below. The smart phone 11 can use this to transact with a merchant POS terminal 7 using NFC or another contactless technology, or to make a payment in association with its wallet service as discussed below. However, online transactions with a merchant are of particular interest in connection with embodiments of the disclosure, rather than contact or contactless transactions with a merchant POS terminal 7. To make an online transaction, the smartphone 11 may also be able to interact with a merchant server 12 representing the merchant 2 over any appropriate network connection, such as the public internet - the connection to the merchant may be provided by an app or application on the computing device.

The transaction scheme infrastructure (transaction infrastructure) 5 here provides not only the computing infrastructure necessary to operate the card scheme and provide routing of transactions and other messaging to parties such as the acquirer 3 and the issuer 4, but also a wallet service 17 to support a digital wallet on the cardholder computing device, and an internet gateway 18 to accept internet based transactions for processing by the transaction infrastructure. In other embodiments, the wallet service 17 may be provided similarly by a third party with an appropriate trust relationship with the transaction scheme provider. To support tokenization, a token service provider 19 is present (again, this is shown as part of transaction infrastructure 5 but may be provided by a third party with appropriate trust relationships), and the transaction scheme infrastructure provides a digital enablement service 16 to support the performance of tokenized digital transactions, and to interact with other elements of the system to allow transactions to be performed correctly - this digital enablement service may include other elements, such as token service provision.

For a tokenized transaction, the transaction is validated in the transaction scheme by mapping the cardholder token to their card PAN, checking the status of the token (to ensure that it is in date and otherwise valid) and any customer verification approach used. This allows the issuer to authorise the transaction in the normal manner.

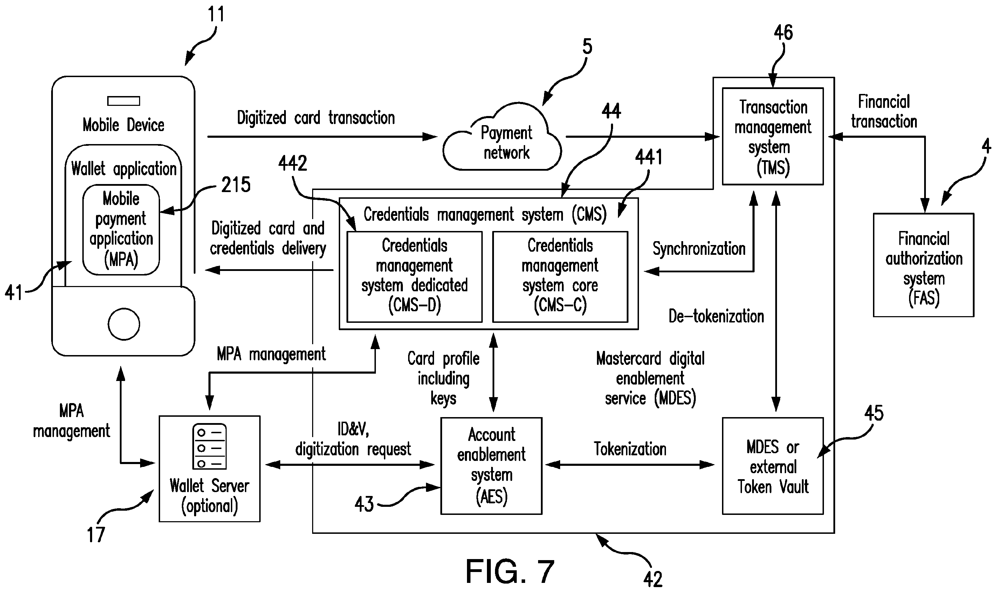

Figure 7 shows elements of a transaction infrastructure to support digitized payments from a mobile device in more detail. This Figure shows as a specific example the applicant's Mastercard Cloud-Based Payment (MCBP) architecture - this is exemplary rather than specific to the disclosure, and illustrates how the architecture is used to support a mobile payment application 215 on a mobile device (such as smartphone 11) - here the mobile payment application 215 is shown as contained within a wallet application or digital wallet 41. Such a digital wallet 41 may communicate with a wallet server 17 to allow management of the mobile payment application, and it also can be used to request digitization of a payment card 6 to be used by the mobile device 11.

The Mastercard Digital Enablement Service (MDES) 42 performs a variety of functions to support mobile payments and digitized transactions. As indicated above, the MDES 42 is exemplary only - other embodiments may use digitization, tokenization and provisioning services associated with other transaction processing infrastructures, for example. The wallet server 17 is not a part of the MDES 42 - and need not be present, for example if the mobile payment application 215 is not embedded within a digital wallet 41 - but acts as an interface between the mobile device 11 and the MDES 42. The MDES 42 also mediates tokenized transactions so that they can be processed through the transaction scheme as for conventional card transactions. The following functional elements shown within the MDES 42: the Account Enablement System (AES) 43, the Credentials Management System (CMS) 44, the Token Vault 45, and the Transaction Management System (TMS) 46. These will be described briefly below.

The Account Enablement System (AES) 43 is used in card digitization and user establishment. It will interact with the mobile payment application (here through the wallet server 17) for card digitization requests, and it will populate the Token Vault 45 on tokenization and will interact with the CMS 44 to establish a card profile with associated keys for digital use of the card.

The Credentials Management System (CMS) 44 supports management of cardholder credentials and is a key system within the MDES 42. The core system 441 manages synchronisation with the transaction system as a whole through interaction with the TMS 46 and manages the channel to the AES 43. The dedicated system 442 provides delivery of necessary elements to the mobile payment application such as the digitized card and credentials and keys in the form needed for use. This system may also interact with the wallet server 17 for management of the mobile payment application.

The Token Vault 45 - which is shown here as within the MDES 42, but which may be a separate element under separate control - is the repository for token information including the correspondence between a token and the associated card. In processing tokenized transactions, the MDES 42 will reference the Token Vault 45, and tokenization of a card will result in creation of a new entry in the Token Vault 45.

Transaction Management System (TMS) 46 is used when processing tokenized transactions. If a transaction is identified by the transaction scheme as being tokenized, it is routed to the TMS 46 which detokenizes the transaction by using the Token Vault 45. The detokenized transaction is then routed to the issuer (here represented by Financial Authorisation System 47) for authorisation in the conventional manner. The TMS 46 also interacts with the CMS 44 to ensure synchronisation in relation to the cardholder account and credentials.

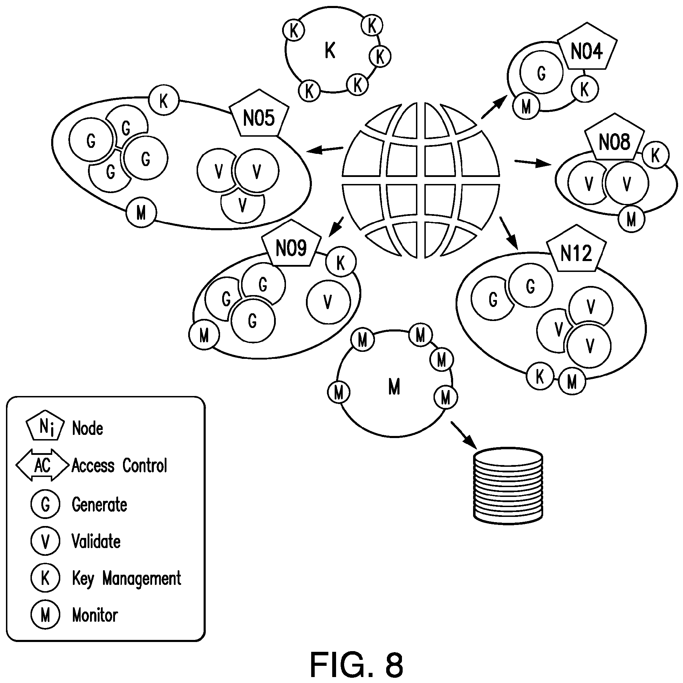

An approach to enabling aspects of a system for the performance of a digitized transaction as shown in Figure 7 - and in particular the management of credentials - to be decentralised is described in the applicant's earlier European Patent Application No. 19178579.9, the contents of which are incorporated by reference to the extent permitted by applicable law. This is done by replacing a central node with a decentralised set of nodes each capable of credential management, as is shown in Figures 8 to 10. This architecture is referred to below as NODES (Network of Distributed E-Commerce Security).

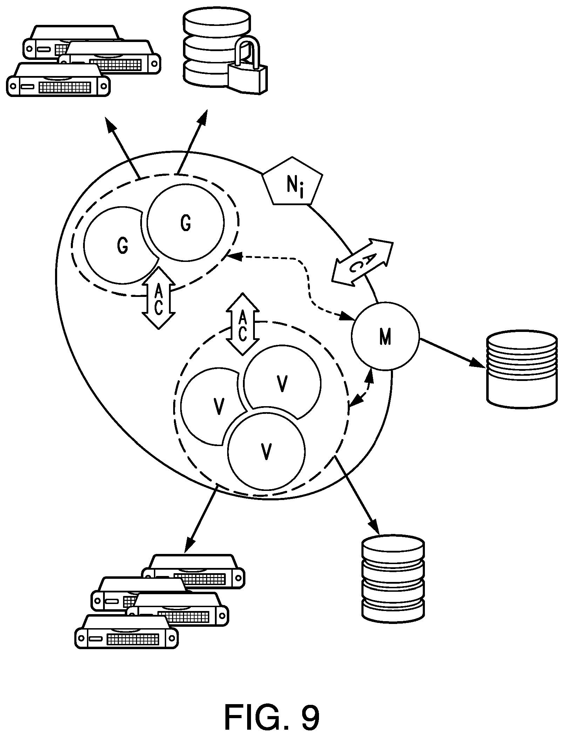

Figure 8 shows a decentralised system of computing nodes Nx, each capable of both generating G and validating V credentials. These credentials can be valid across the whole system (unless restricted to some nodes as result of on-soil regulation or the like), and in this case are associated with transactions for a set of users (clients) whose transactions are routed to that node, typically through geographic proximity. Nodes provide credential generation G and credential validation V as services to clients, and they need to be able to generate the credentials securely and validate them securely while they are valid at least. In the architecture shown, credentials are not stored - they are generated on request and validated on the fly. As Figures 8 and 9 show, in addition to credential generation and validation, key management K and monitoring M can be considered as services both locally at a node and across the system, and access control AC will typically be required to allow access to a service. These aspects will all be described in more detail below.

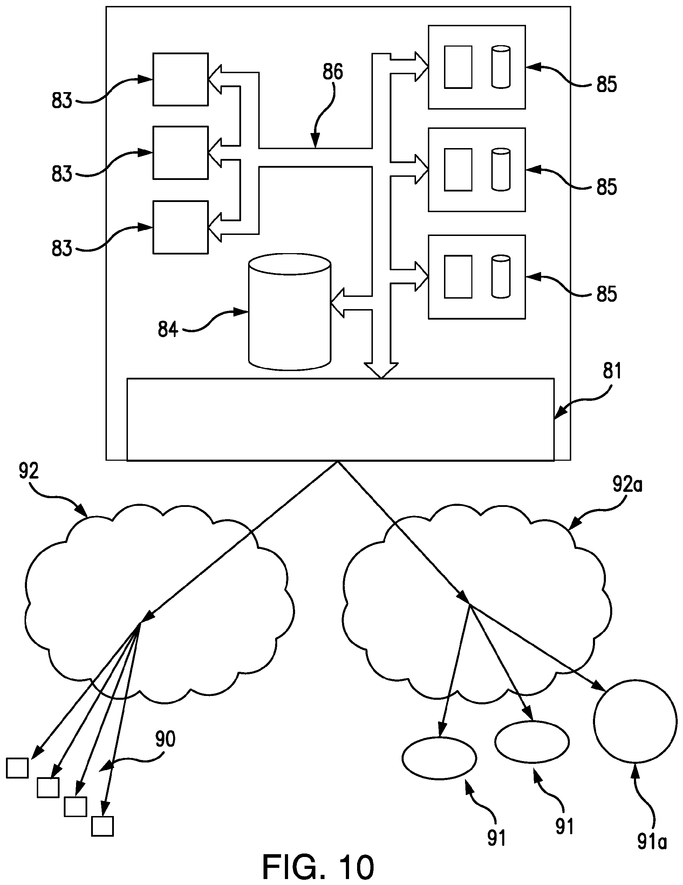

Elements of a suitable computing node are shown in Figure 10. The node 80 comprises at least one networking connection 81 to allow communication to clients 90 and other nodes 91 as well as (in this example) a central node 91a. Communication is shown here as being through separate networks to each set of other parties - through a first network cloud 92 for connection to clients, and a second network cloud 92a for connection to other nodes within the distributed system. This reflects that these networks may be physically different, or that they may have different security requirements and protocols.

The node 80 contains a plurality of conventional servers 83 (which will contain their own processors and memories - not shown - along with other components as would normally be found in a server) and a memory 84 containing a central database. Also comprised within the node 80 are a plurality of hardware security modules 85 (HSMs), adapted to hold cryptographic material in the form of keys needed to perform cryptographic functions and to perform cryptographic functions securely. Here elements within the node 80 are shown communicating by means of a bus 86. While the node 80 in this case is represented as a single data centre, this is not required - the "bus" may be, for example, comprise a dedicated network connection between a group of related data centres that allows them to provide a real-time response such that they will appear to other entities communicating with the node to be part of an integrated whole.

Existing procedures for credential management in payment systems are centralised - any request to create or validate credentials results in a query to a centralised system. For a payment system implementing EMV standards, credentials are generated using keys derived according to a hierarchical process. Issuer Master Keys (IMK) are associated with a specific range of tokens, and keys for use for credentials are derived hierarchically (Card Master Keys - CMK - from IMK, and then Session Keys - SK - from CMK). This approach is used for devices, such as physical cards, but is also used for digital transactions. The number of digital transactions is increasing extremely rapidly, as opposed to device-based interactions where the growth is more consistent with resources.

In the digital ecosystem, while there is very rapidly increasing demand, there is also generally a more secure environment, as the interaction is typically between merchant systems (or payment service providers) and the transaction system over secure pathways between well-identified participants. There are thus interactions that may require multiple cryptographic operations for security in a device context that can be streamlined when delivering services in a server context when exposing API to access the services while keeping all the assets secure in a constrained environment including key management and cryptographic operations.

While it may appear desirable to scale a transaction system for performing digital EMV transactions by using a set of distributed servers to generate and validate credentials, it is found that this approach does not scale. The overall level of key generation would not be changed, but the amount of messaging within the system would be very greatly increased, as an extremely large number of tokens would need to be managed and replicated. Processing would be demanding and also extremely expensive, as existing EMV key generation approaches require customised rather than off-the-shelf Hardware Security Modules (HSMs), and data storage and particularly network latency would become impossible to manage problems.

This distributed approach is supported by replacing the binding of a token to a specific hierarchically derived key, allowing instead the first available key from a stack of keys to be allocated to a tokenized transaction. This approach, using flexible and dynamic key management, allows for a scalable solution. Monitoring can be carried out in such a way as to ensure that the distributed architecture is secure without requiring the transmission or replication of large quantities of sensitive information. This approach can also be carried out in a standard HSM using fully FIPS compliant processes - for example, DES and 3DES need not be used. This approach is described in more detail below.

At present, the device security model is also used by the present applicant for fully digital transactions. This security model involves Issuer Master Keys (IMKs) being stored in the transaction system HSMs and used to derive Card Master Keys (CMKs) from the relevant IMK and a card PAN (Primary Account Number). These CMKs are then stored in a device (typically a Secure Element or substitute technology). When using software-based solutions to generate transaction credentials using a mobile device, a Session Key (SK) is generated using the relevant CMK and an ATC (Application Transaction Counter) for the card/device - this is currently generated by the Credentials Management System (CMS) as shown in Figure 7. At present, all tokens, even for fully digital transactions, are bound to this IMK/CMK/SK derivation. This also applies for transaction credentials generated by server through API exposed by the transaction system for remote payment transactions.

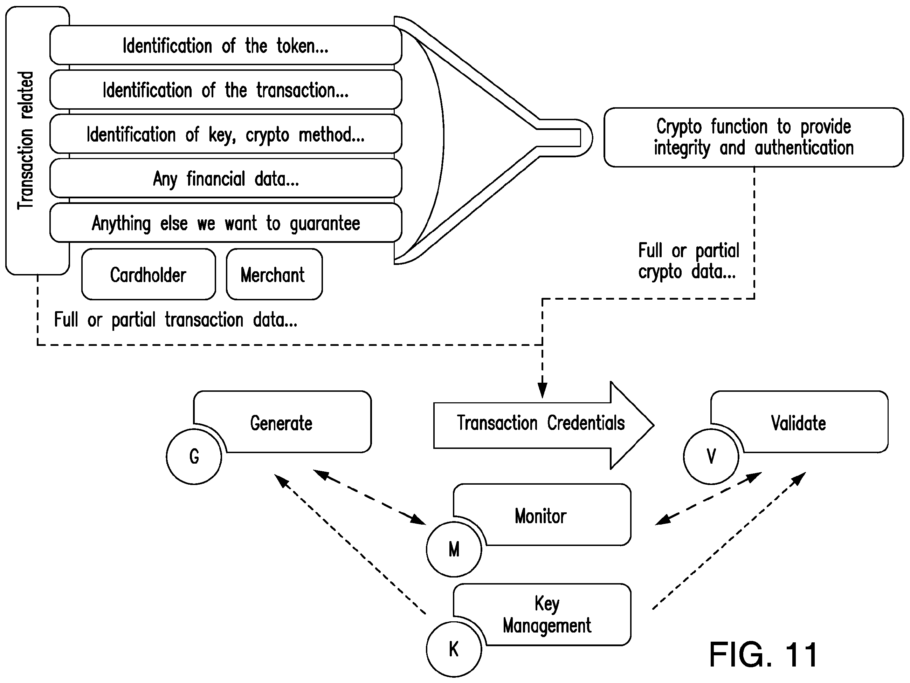

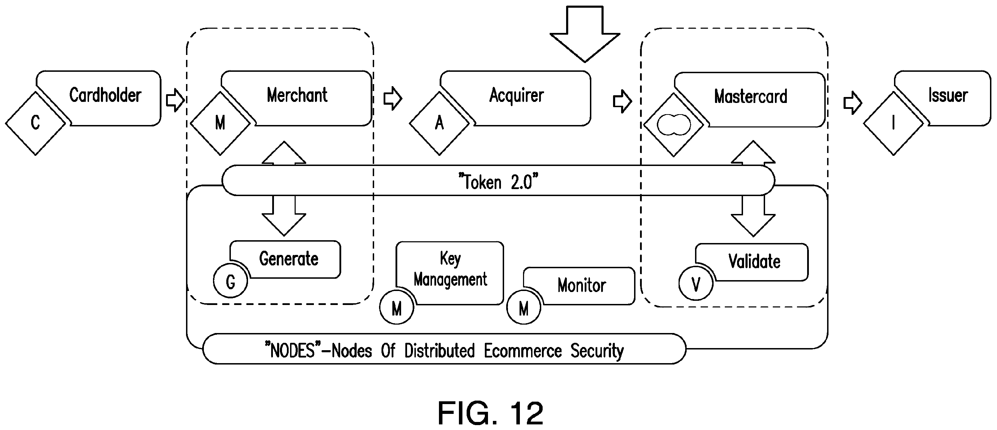

This approach requires a very heavy management load for keys, which is not appropriate for fully digital transactions, as is discussed below with reference to Figures 11 and 12. Generation of SKs, and hence Application Cryptograms (AC - a standard mechanism in EMV transactions) requires multiple cryptographic operations, not all of which can be carried out by a conventional off the shelf HSM, so bespoke HSMs are required. Massive distribution of keys across the system is required so that performance of a transaction can be supported wherever it occurs, and ATC management is complex. It would be desirable to use standard HSMs, avoid massive key replication while having keys directly available for use, and to be able to provide a solution that limits the number of HSMs overall (as these typically support only a few thousand keys).

Much of this security is to provide assurance by appropriate prevention mechanisms even if there is the possibility of compromise at a system endpoint (for example, at the cardholder device). Aside from this, security has a limited role, as shown in Figure 11. The main purpose of the cryptographic function is to provide a guarantee - this covers both integrity of the data and authentication. The transaction related data protected by a cryptographic data includes identification of a transaction and the associated token, along with an indication of any cryptographic processes used and any relevant financial data (along with any other aspect of the transaction that needs to be guaranteed). This is represented by a transaction credential - this needs to be generated G and subsequently validated V, with these processes being monitored M to ensure overall system integrity and supported by a key management system K of some kind. The present disclosure relates to an approach to monitoring which is effective to address the consequences of erroneous or malicious action by appropriate detection, messaging and reaction - as will be described, this largely takes place separately from the actual performance of a transaction.

In the case of a fully digital transaction, these processes take place in a constrained environment where endpoint security is not an issue in the same way as with devices. As can be seen from Figure 12, in this domain the token does not reach either of the endpoints of the conventional transaction management system - the cardholder or the issuer. Instead, it operates across a merchant system or a payment service provider (PSP) and transaction scheme provider.

This approach allows for decentralisation of the credential system from a complex central server into a number of nodes providing services. These nodes will typically be geographically distributed but may extend over a number of data centres (for example, by use of a cloud infrastructure to achieve data sharing within a node). These nodes provide services - in relation to credentials, a generation service G and a validation service V - with defined rules for access control to the services. The merchant or PSP communicates with the generation service G to obtain credentials, which are then used in a standard authorisation process carried out over the payment network of the payment system, with the validating service V being called upon where necessary to validate the credential. These services have access to the computing infrastructure (HSMs, databases) of a node. Monitoring M and key management K services are also provided - these may be centrally organised or comprise a mix of central and local functionality.

In the above discussion, it is assumed that nodes have both a generation service G and a validation service V - this need not be the case. In the arrangement shown in Figure 7, nodes are shown which provide only generation or only validation services. Both of these arrangements may well occur.

Access control to services can be provided in an essentially conventional manner. A general set of controls can be defined for a node, with the possibility of local modification - for example, to meet local regulatory or other specific security requirements. This approach makes it easy to implement localised policies, for example, by constraining all traffic for a particular country to a particular set of nodes, or by taking other region- or market-specific actions. Access control can be performed at more than one level (for example, for individual services, but also for a node), and there may be specific rules or checks for specific service types. Access control is potentially very granular and may provide specific solutions in a versatile way - for example, it could be used to allow a given merchant to perform a maximum number of transaction credential generation operations during a defined time for a given token.

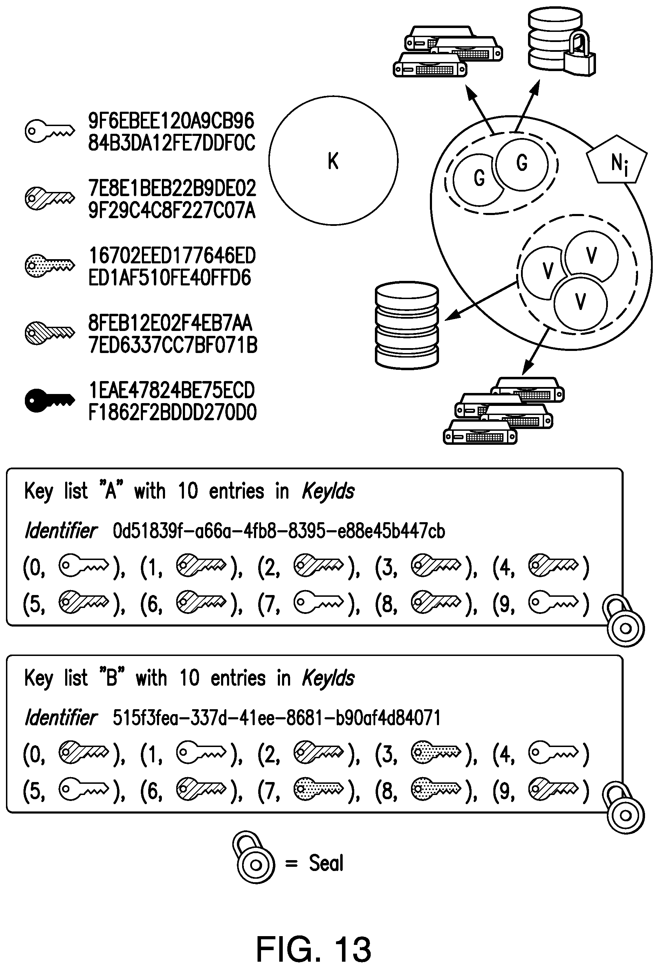

The key management mechanism shown in Figure 13 illustrates how a limited number of keys can be allocated to a node while providing a deterministic process in order to pick a key to generate credentials. The same process can be used by a validation entity to determine the key that was used by the generator so that it can validate any cryptographic material that is part of the credentials submitted for validation.

For each node, the generation G and validation V services have access to a pool of HSMs. The HSMs contain keys that are each uniquely identified by a set of key identifiers (**KeyId**). **KeyId** may be a label, a value, an explicitly unique value such as a UUID, or anything else with appropriate properties. These **KeyId** values are stored in uniquely identified (Identifier) key lists - these key lists provide a list of relationships between an identifier (**Id**) and a stored key **(KeyId)**. The

identifiers (**Id**) are what will be determined by the deterministic process in order to establish what key is to be used, as will be described further below.

The integrity of each key list is guaranteed using a seal (Seal) - if the key lists are provisioned from a central location, this may be applied by a trusted party associated with that central location. Several other distribution models can be supported using for example a trusted party being a local functionality instead of a central location. A node will typically have a number of key lists available, but with only one active for generating credentials (G) at a given time - it will however generally be necessary for the validation service (V) to be able to access any key list that may be associated with a credential that is still valid. Key rotation in this approach is extremely straightforward - it may simply involve replacement of the active key list with another key list. It is however very straightforward to tell which **KeyId** is needed to validate a credential - it will be determined fully by the node identifier and the reference of the key list. That information is part of the credential and is used as input to the deterministic process to pick a key from a list of keys.

Figure 13 illustrates an exemplary arrangement for Node Ni, which has two generation services G able to generate credentials associated with transactions. At any given point in time, these services G will be required to use a given key list - say Key List A in the first instance. This uses the yellow and blue keys, so these keys must be loaded in the HSMs used by the generation services G. After the expiry of a period of time, the key rotation process may for example mandate the use of Key List B - this uses yellow and blue keys, but also the green key, so the green key must be loaded in the relevant HSMs if not already present. The specific key to be used is selected from the key list by a deterministic process-this will typically give a different result after key rotation, but this is not inevitably the case (for example, Id=3 or Id=6 would give the blue key before or after rotation). While the generation services G do not need Key List A after key rotation, the validation services V still do - they require access to any key list that relates to a potentially valid credential. The validation services V must be able to establish exactly which key was used to generate a credential by the generation services G in order to validate a credential.

The transaction related data to be protected cryptographically includes identification of the token associated with the transaction, but also identification of the transaction itself. For this, some kind of transaction identifier is required. At each node, the credential generation and validation services have access to a local database which can be used to manage such data. To ensure that transactions are managed effectively across the system, any generation of transaction credentials for a given token should be associated with a unique transaction identifier for each transaction. This may be a UUID or any appropriate identifier structure (such as a concatenation of an n bit node identifier, an e bit epoch time, and a c bit local counter).

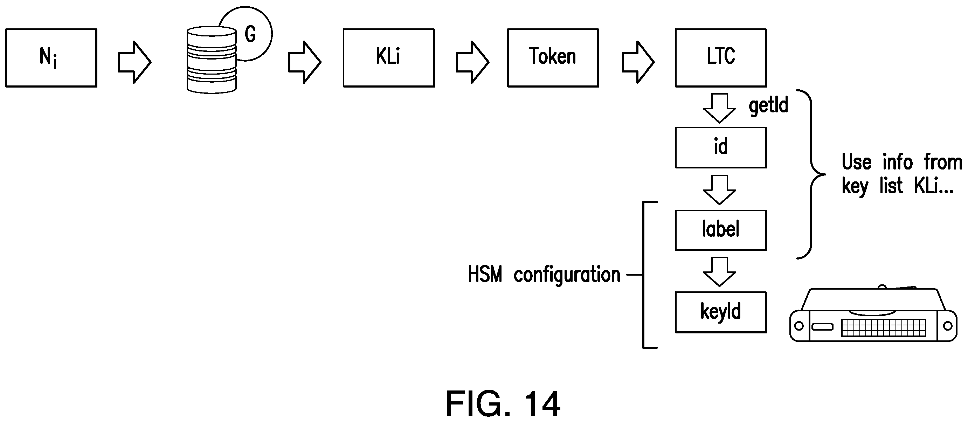

The size of data to be carried in transaction credentials could however be reduced to a few digits by use of a local transaction counter. This could simply be stored in the local database of a node and the local (rather than a global) value incremented when a local generation service G generates new transaction credentials for a token, a process shown in general terms in Figure 14.

An exemplary process for identifying a key to use for a transaction will now be described with reference to Figure 13. As indicated, at any given time a generation service G has access to a set of keys in local HSMs and uses keys in accordance with its currently active key list. This key list is itself uniquely identified (by *Identifier*) and contains a list of entries which correspond to relationships between an identifier (**Id**) and a stored key, represented by **KeyId**. In the case of Key List A, there are ten entries, and each **Id** is a single integer.

There will be a deterministic process associated with a key list to determine which key will be associated with a given transaction. It need not be the same deterministic process for every key list, but it needs to be used consistently for that key list so that both generation and validation services will achieve the same result. To provide this association, the deterministic process should operate on information identifying the transaction, such as some kind of transaction identifier - in this case, the local transaction counter (LTC) is a particularly effective choice as this is conveniently available and easy to process.

There are many choices available for a function, but the simplest choice is a MOD operation - for example here, **Id** = LTC MOD 10 would be appropriate to provide a deterministic result which could point to any of the available values of **Id**. Any validation service V with access to the transaction counter value in transaction data (or any counter derived from that value) can then determine the logical key identifier that was used by the generation service G that generated the credential and access the correct stored key without any trial and error mechanism. Associating the deterministic process function (referred to below as keyList.GetIdFunction, or GetId) to the attributes of a key list in this way allows a scalable solution that can accept any number of logical key identifiers for a given key list.

The HSM cryptographic function should be appropriate to ensure data integrity and authentication through credential generation and validation. The cryptographic function operates on the chosen transaction data, using the key, and provides an output which does not expose the key. Various alternative cryptographic functions could be used - HMAC is a particularly effective choice with several options regarding the hashing function, but CMAC, CBC MAC are among possible alternatives not even talking about solutions using asymmetric cryptography. The cryptographic function used should be specified in the key list (as *keyList.CryptoFunction*) and is also driven by the capabilities of the HSMs used for generation and validation. On-soil regulations, cryptographic material export or other security considerations may lead to the choice of specific cryptographic functions.

Within the transaction data, there should be information representative of the application cryptogram generated during the transaction process. This may be a reduced form of the cryptogram - for example, in legacy EMV transactions this may be provided as the CVC2 field. This is significant as a validation service V must be able to access all the data used by a generation service G to generate a cryptogram - this will include the following:

> dynamic information carried as part of the transaction flow;
> shared information from one of the following:

>> replicated processes (such as management of the key lists);
>> system parameters for particular use cases.

Different approaches can be used for difference transaction information formats - legacy transaction, UCAF and DPD field transactions. Legacy transaction use cases provide a solution when the Merchant and/or the PSP are only able to manage PAN, Expiry Date and CVC2 as part of the transaction flow, and do not have access to more recent developments. The UCAF use case aims to leverage the Universal Cardholder Authentication Field to carry more data as part of the transaction flow. The DPD use case covers the recently introduced Digital Payment Data, a container able to carry all the data needed as part of the transaction flow. As is noted below, the additional capabilities of formats such as UCAF can support embodiments of the disclosure in providing additional capabilities.

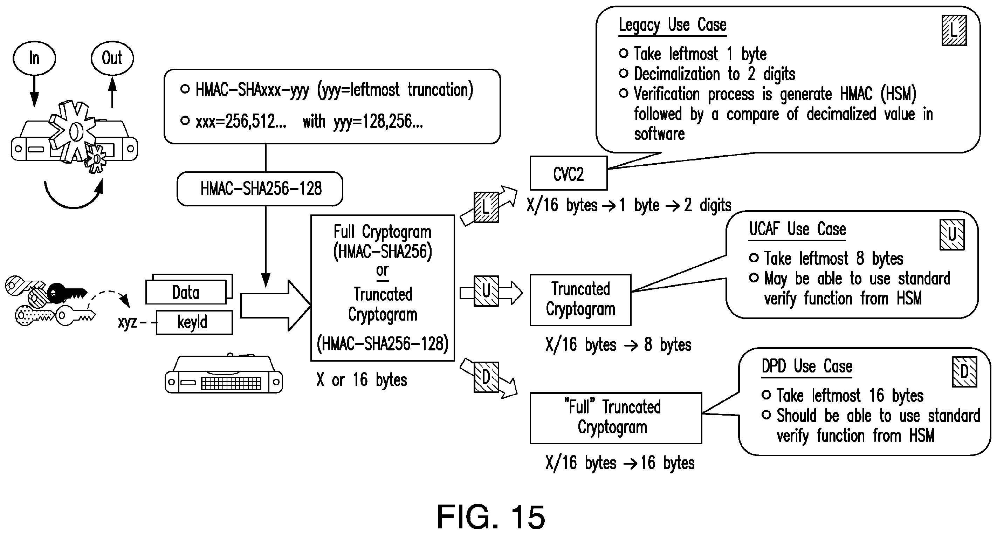

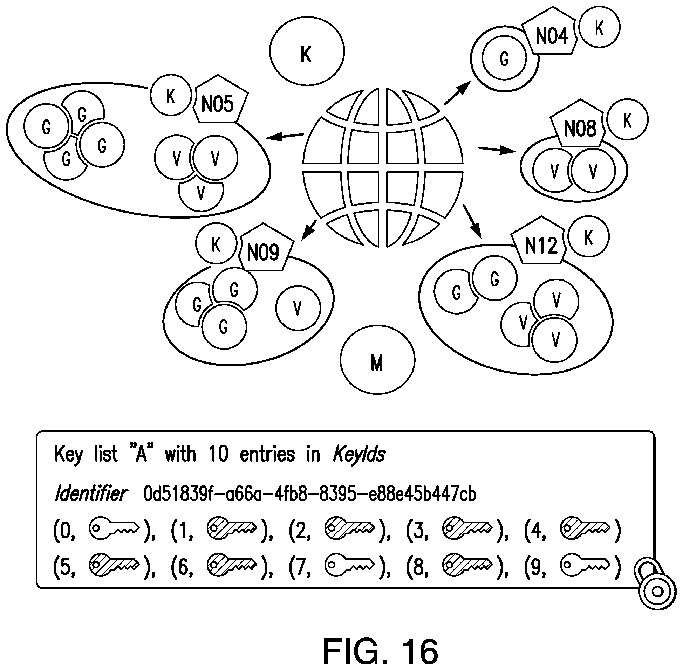

A full set of cryptographic mechanisms is shown in Figure 15. Key management is discussed with reference to Figure 16. There are two aspects to key management in this model: management of the keys themselves, including their generation and delivery to the HSMs associated with the nodes, and management of the key lists, including their generation, distribution, activation and deactivation. The key lists are sensitive assets while keys are considered as secret assets - the key lists define the keys to be used for generation and validation of cryptograms. Keys require end to end security with secure transport of the keys using wrapping/unwrapping techniques when loading the keys in HSMs. Their use should not be compromised by the key lists in case an attacker would like to change the content of a key list in order to alter the key selection process. The integrity of key lists is guaranteed by the seals - a seal is provided for a key list by the generating party or an associated trusted party, will involve a suitable cryptographic process (such as HMAC with an appropriate dedicated key or using for example a digital signature generated using asymmetric algorithms such as RSA, ECC, SM2...), and has the effect that any relevant part of the system can have confidence that the key list was generated by an appropriate party and has not been modified. In addition, the key list seals can be used in the generation and validation of cryptograms to secure the credentials.

Different control models are possible. There may be centralised control, with a central service generating keys and key lists, and distributing these to the different nodes. There however also may be localised control if dedicated processes are required at a particular node. This may in particular apply if there are specific requirements for a particular country - for example, on-soil regulations or restrictions on export of cryptographic material. This may also apply if there is a proprietary mechanism needed for HSM management - for example, with a particular cloud service provider. This need not be node-limited - it could apply to regional control with a central service within a region (this may be particularly appropriate where there is a specific security model for a particular country to meet local legal requirements). There may also be a hybrid or composite model, in which some key and key list provisioning is central, whereas some is local - there may also be a distributed model in which distributed peers together assume the role of a central service.

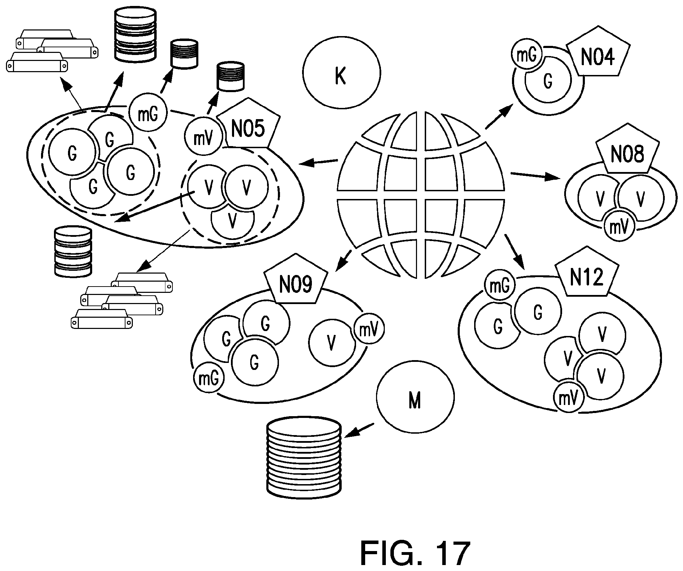

Monitoring is shown in general terms in Figure 17. Here, monitoring is complementary to security actions taken directly in a service to prevent fraud or misuse (such as the basic purpose of the service - generation of a credential using a cryptogram with subsequent validation). Such monitoring aims to detect security anomalies associated with a transaction - it can then trigger appropriate reaction mechanisms to contain any security risk and identify any attacker. In principle, this may have both local and central aspects. It is found that a hybrid approach is particularly effective in order both to provide effective detection of any issue and to produce reaction effective to counter risks associated with a fully distributed architecture.

There are three types of issue to be addressed by monitoring in such a system: integrity of the distributed system; generation of transaction credentials; and validation of transaction credentials. As transaction credentials may be generated or validated anywhere, it is important to have effective monitoring across the whole distributed system.

As described in, for example, the applicant's earlier WO 2022/250716 A1, recent versions of electronic transaction protocols can be used to carry more information than earlier protocols. Where the Universal Cardholder Authentication Field (UCAF) is available, a number of additional digits are usable. UCAF is a format type developed for Digital Secure Remote Payments (DSRP), a technology of the applicant adapted to bring EMV approaches - including the use of an application cryptogram - into effective use for online and other digital transactions through tokenisation. UCAF is used to carry the cryptographic data in the authorisation request. A UCAF data format will carry a predefined set of data objects in specific fields - between different UCAF data formats, the set of data objects may differ, as may the space allocated to different data objects.

UCAF Format 0 was developed initially, and is used by particular technologies of the applicant (for example, Mastercard Cloud-Based Payment, TEE-Based Payment and some varieties of Mobile PayPass). This format contains necessary cryptographic information (such as the application cryptogram, application transaction code and the unpredictable number) but no merchant binding. UCAF Format 0+ (used by later versions of Mastercard Cloud-Based Payment) expands this to inclusion of a card verification result, but still provides no merchant binding. UCAF Format 1 (used by MChip Mobile) also does not have any merchant binding, but does include a pin try counter result. Merchant binding is provided in UCAF Format 3, which comprises a merchant ID hash and also an approximate amount (this is used for newer versions of transaction protocols that require merchant binding). UCAF Format 3+ also includes a card verification result.

The UCAF is base 64 encoded when carried in the payment network - it is carried as a 28 character alphanumeric character string. It therefore needs to be base 64 decoded before processing.

One architecture that uses a very full set of capabilities is the DXD (Digital By Default) architecture for digital transactions for specific country environments. A particular UCAF format, UCAF Format 6, has been developed for this purpose with a very full set of capabilities - more cryptographic material can be used, a larger number of nodes can be used without node identification becoming a problematic issue because of limited available space in transaction data as defined in electronic transaction protocol requirements, and it may also be possible to rotate key lists more frequently than 24 hours, as there is the space to use more than one bit for key list identification for validation services. Additional features can be delivered leveraging the available space in transaction data, for example by supporting merchant locking techniques (when the transaction is effectively bound to a given merchant using some form of merchant identification), by including additional components in the cryptographic process such as by using some pseudo-random element or variable content between the generator and the validator, or by taking additional measures to provide full compliance with any regulatory requirements.

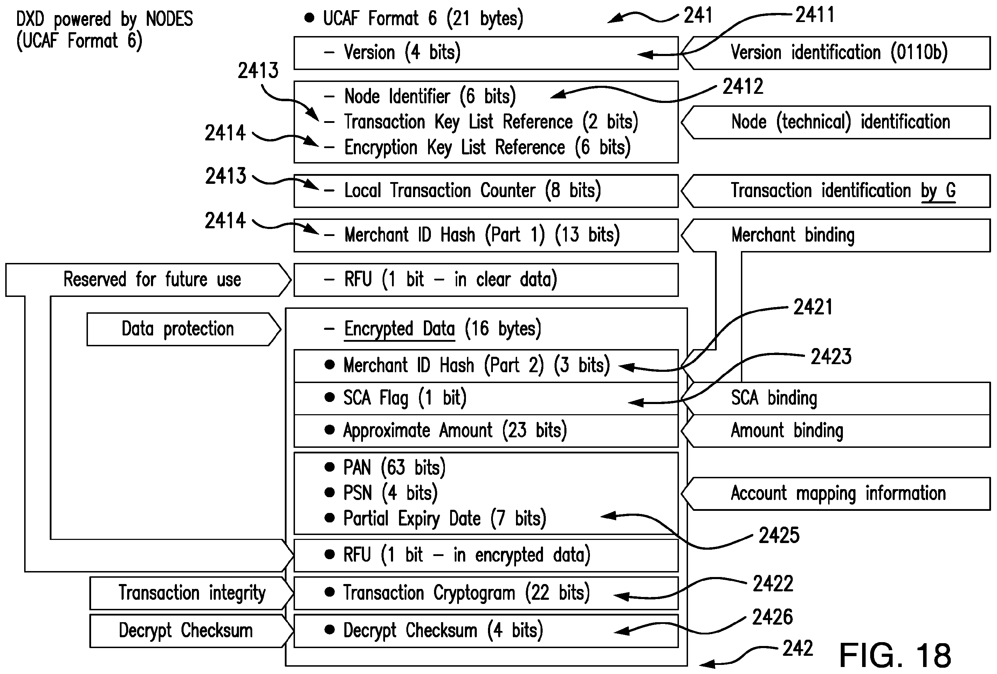

This UCAF Format 6 structure is shown in Figure 18. This is not an embodiment of the disclosure, but is shown here simply as a comparative of the type of data that can be carried in such a format, and how it can be carried. The UCAF Format 6 structure comprises an encrypted part 241 and an unencrypted part 242. The encrypted part 241 contains the credential (the cryptogram) and also certain transaction data, which allows certain elements to be held only in encrypted form. The unencrypted part 242 allows the transaction and its provenance to be identified.

In this example, the unencrypted part 241 contains 4 bytes of information that establishes the version, the node (and information related to the node), the transaction and certain merchant information. Version information 2411 is a 4-bit field allowing multiple versions of the format to be used. Information relating to the node includes a 6-bit node identifier 2412, and the key list references associated with the node - as indicated previously, these include a 2-bit transaction key list reference 2413 and a 6-bit encryption key list reference 2414. The transaction itself is identified by 1-byte of Local Transaction Counter (LTC) 2415. As described above, this information is sufficient to allow a node to perform validation (if permitted to do so) by regenerating the credential/cryptogram. Merchant binding to the token is provided by a Merchant ID Hash divided between a 13-bit unencrypted part 2416 and a 3-bit encrypted part 2421. Creation of the Merchant ID Hash is described in more detail below.

Use of encryption allows other transaction information to be held in encrypted form, but available in the future after decryption so that a transaction may be mapped to a PAN (Primary Account Number) without the need for maintaining a specific mapping database - other significant information such as PAN Sequence Number (PSN) can be held in this way. The encrypted data 242 comprises 16 bytes of data, the first three bits of which is the encrypted part 2421 of the Merchant ID Hash as identified above. The cryptogram 2422 forms another 22 bits of the encrypted data. One bit is used as an SCA Flag 2423 to indicate whether Strong Customer Authentication is used for the transaction. A further 23 bits are used for approximate transaction amount 2424 - these can be coded in the form

$$\text{Reconstructed Amount} = A * 2^B$$

where A is used for the leftmost 18 bits and B for the rightmost 5 bits. Another 74 bits relate to card information 2425. This includes the PAN (63 bits) and the PSN (4 bits, which is sufficient for one digit value) which can be provided in full. 7 bits are used to carry expiry date information - this therefore needs to be a partial expiry date, which is discussed below - the embodiment described below also supports delivery of the partial expiry date being optional at time of generation of the transaction credentials. A further element in the encrypted data in this case is a checksum 2426.

The Merchant ID may use the Remote Commerce Acceptor Identifier, which is a relatively new EMV field used to identify merchants (for example, by business website URL or reverse domain), if available. The Merchant ID Hash is provided in the following way:

- Merchant ID is provided as (by conversion or otherwise) a HEX value

- Buffer is created as follows

  ◦ Hash of Merchant ID (32 bytes)
  ◦ Approximate Amount (3 bytes left padded by Ob)
  ◦ Local Transaction Counter (coded on 2 bytes, left padded by Ob)

- Hash computed over buffer using appropriate crypto model
- Merchant ID Hash is first two bytes of hashed buffer

As noted above, in the embodiment provided here, the provision of an expiry date value is optional. If it is provided, then encoding and decoding activity will be carried out by the NODES system if it is valid - otherwise an error will be returned. If it is not provided, information must be carried that will prevent the system from returning an expiry date value in validation or decryption.

This information needs to be provided using the limited amount of space available - 7 bits - working from the Standard Expiry Date, which is coded over 4 digits (YYMM), though with practical constraints on the values for some fields (as there are only 12 months in a year and the year of expiry will not be far removed from the present year). This is exploited by first of all defining a "baseline" value for expiry date, which is simply provided as a parameter for the encryption key list. After this, one special value of 0 [0000000b] is determined for encoding of "no expiry date defined" (generate) - for this value, there should be no expiry date returned at the time of decoding (whether for validation or for any other decryption). All other values - 1 [0000001b] to 127 [1111111b] - are simply used to indicate the number of months from the baseline value to the provided expiry date (on generation) to provide reliable decoding on validation or any other decryption. If a supplied expiry date is returned which is lower or equal to the baseline value, or exceeds 127 months after the baseline, this is invalid, and an error is returned. As noted above, the encrypted data also comprises a checksum. This is provided as in some circumstances it may be desirable to obtain assurance on decryption of the integrity of the data beyond that which is provided by validation of the cryptogram.

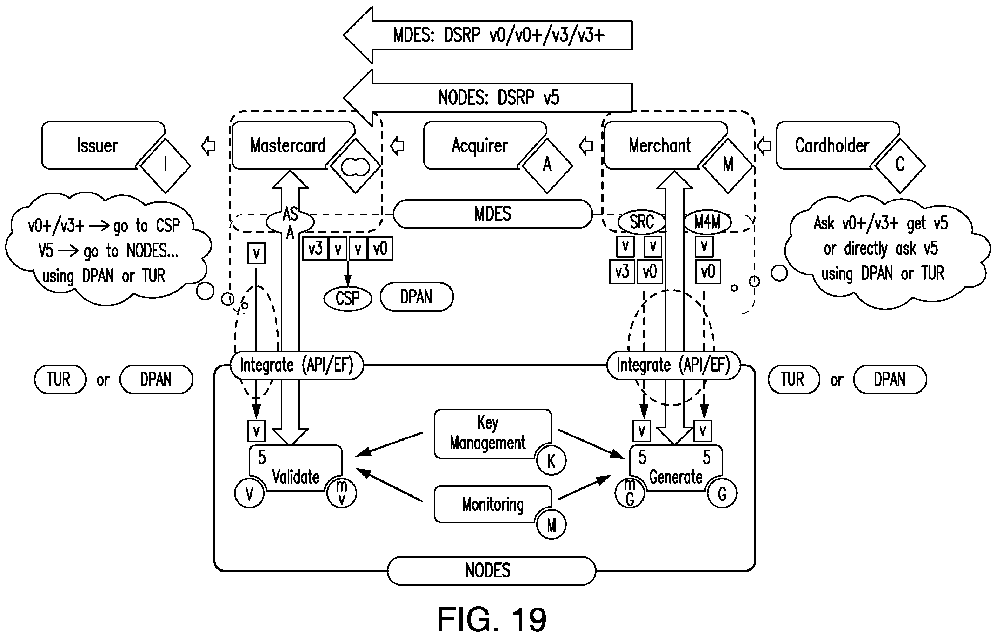

The UCAF Format 6 illustrated in Figure 18 indicates the types of information that can be carried if all relevant parties support such a format. However, the credential generation and validation infrastructure may in practice need to support service requests from a variety of parties using a number of different transaction flows and transaction types. In some cases, all parties will be able to support a structure of the type shown in Figure 18. In other cases, parties may only be able to support a much more limited information exchange. This situation is illustrated in Figure 19 - this illustrates a variety of cases that may need to be supported by the system. Whereas the NODES architecture is generally designed to operate using later UCAF formats - here UCAF Format 5 - earlier digital transaction solutions are more limited in their capabilities. Consequently, in order to use credential generation and validation with a NODES architecture, some solution other than UCAF Format 5 as currently existing needs to be found, as this format does not properly support these earlier architectures.

Figure 19 shows different routes for a digital transaction supported by the Mastercard Digital Enablement Service - as discussed earlier in the specification, this is used for online transactions and relies on card tokenisation. The token is here referred to as a digital Primary Account Number (DPAN), and in some architectures may be identified by a Token Unique Reference (TUR) rather than a DPAN. In pre-NODES digital architecture solutions, such as MDES for Merchants (M4) and Secure Remote Commerce (SRC), transaction and encryption keys are bound to the token, whereas in NODES, keys are bound to the node, rather than to the token. This means that there is a mismatch in information needed for the transaction between that carried in normal UCAF Format 5 (devised to carry the information required by NODES) and earlier formats (such as Format 0 or 0+, which can support M4M or SRC, or Format 3 or 3+, which can support SRC). As discussed above, Format 0 has no transaction binding, whereas Format 3 has merchant binding and supports strong customer authentication (and so is compatible with PSD2), with the + indicating presence of a card verification result.

The present inventors have appreciated that a solution to this difficulty can be found by developing a new form of UCAF format - here, a new form of UCAF Format 5 - that is constructed differently depending on what type of transaction that it needs to service, following the principles set out above with respect to Figure 4. For example, for an M4M transaction, the NODES architecture may be required to generate (and later validate) a credential, but in such a way that it has the elements of UCAF Format 0+, rather than of normal UCAF Format 5.

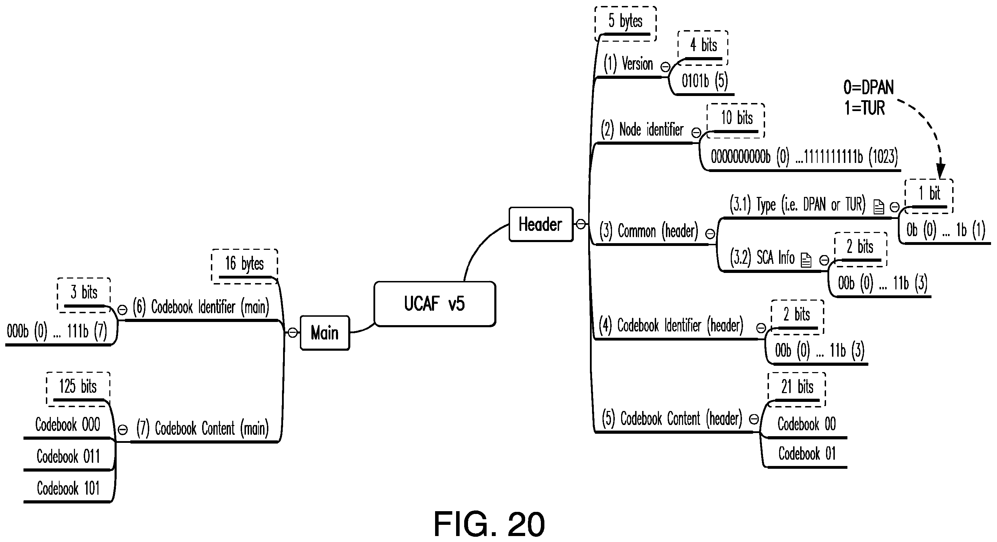

As can be seen in Figure 20, this is achieved by a different type of UCAF Format 5 which can adopt a variety of different subformats, with the subformat adopted identified by a suitable code. This is consequently an embodiment of the disclosure as described in general terms with respect to Figure 4. It should be appreciated that embodiments of the disclosure are not limited to UCAF formats, or even to formats for transaction credentials. Embodiments of the disclosure can be provided for other situations in which a credential needs to be both generated and validated, particularly within a strongly distributed system and where the credential is complex and needs to be accompanied by related material.

Figure 20 illustrates UCAF Format 5, which has the distinctive feature that it is adapted for subformats to contain different information in different structures to support transactions of different types. The UCAF Format 5 consists of 21 bytes of hexadecimal encoded in base 64 - this is carried in an ISO8583 message (the ISO standard for financial transaction card originating messaging, used for authorisation messages by most transaction system providers) in Data Element 104 (DE104), a field reserved for transaction description, specifically in DE104SE1001. This applies to all UCAF formats, with the format version being coded in the leftmost 4 bits for Digital Secure Remote Payment (DSRP) via MDES. This UCAF Format 5 information is organised differently depending on the needs of the client requesting the service - in the example indicated above, by providing a form of UCAF Format 5 that can be used by the requesting client (which requires the information provided by UCAF Format 0+) while still meeting the requirements of the NODES architecture. This can be achieved by using a codebook approach - a code value in the UCAF Format 5 indicates the subformat that will be employed (here, one with the information carried by UCAF Format 0+), and the codebook will indicate the subformat that is associated with that code, and which carries the correct set of information.

An implementation of this approach will be described in greater detail below. In this form of UCAF Format 5, the 21 bytes of the message are divided into a 5 byte header containing technical data (and always in clear) and a 16 byte main body containing transaction data (which may be either clear or encrypted according to implementation). The exemplary codebook provided here allows for 32 possible combinations - four headers and 8 main bodies. The technical data provided in the header can include such information as the version, the DPAN or TUR and SCA information, along with the node identifier, key list and transaction counter). The transaction data in the main body may include token PSN, amount and merchant binding, CDCVM information, initiation of the transaction (client or merchant), transaction type and transaction reference. The header enables identification of the information as UCAF Format 5 and provides the information needed to call the NODES service effectively. The main body provides everything needed for (secure) control of the transaction and allows for behaviour mimicking an "older" form of transaction if needed while allowing for a full set of capabilities if supported.

Using this approach, many different sets of requirements can be supported while using only one format - UCAF Format 5. Unique token identification can be achieved by using DPAN or TUR combined with token expiry date (and token PSN) - this is robust even for re-digitization processes. Presence of additional information allows for replay (same transaction credentials submitted for validation more than once) and double spending (same transaction credentials submitted to multiple validation services) detection at the time of validation. In additional to supporting the provision of earlier version suitable versions of Format 5 (here, versions 0, 0+, 3 and 3+), this Format 5 is fully adapted for compliance requirements (such as PSD2 and Token Assurance Framework requirements) - it supports SCA, can provide CDCVM information, and can provide both amount binding and merchant binding. Further capabilities can also be provided (for example, using the spaces identified as reserved for future use in the embodiments described below): for example, identification of transaction initiator (cardholder - CIT, or merchant - MIT); transaction type identification; and merchant or PSP reference. Using such reserved spaces allows new data to be carried if needed without impact on acquirers or data processors.

It should be noted that other aspects of the system can be further developed when UCAF Format 5, describing multiple options, is used. For example, a more sophisticated function can be used for determining the key from the key list - instead of getId being simply "LTC MOD 10", a more sophisticated approach can be used, for example the following:

For DPAN based transactions, id = (LTC + Luhn) MOD 10;
For TUR based transactions:
compute t = HEX2DEC (the rightmost character of the GUID of the TUR)

$$id = (LTC + t) \ MOD \ 10$$

This approach (where Luhn is the Luhn number calculated for the DPAN, and GUID is the globally unique ID for the TUR) prevents overuse of particular keys within the keylist.

This specific embodiment of this UCAF Format 5 solution is discussed in more detail below. As indicated above, this splits the UCAF into a 5 byte header in clear and a 16 byte main part, which may be clear or encrypted, with the codebook providing options for the header and main part within one format version. This approach can be used with DPAN or TUR, optimizes space for node identification, key list references and LTC values, therefore allowing keys to be rotated less often, and provides the possibility of adding a number of new capabilities now while reserving room for further new capabilities in the future.

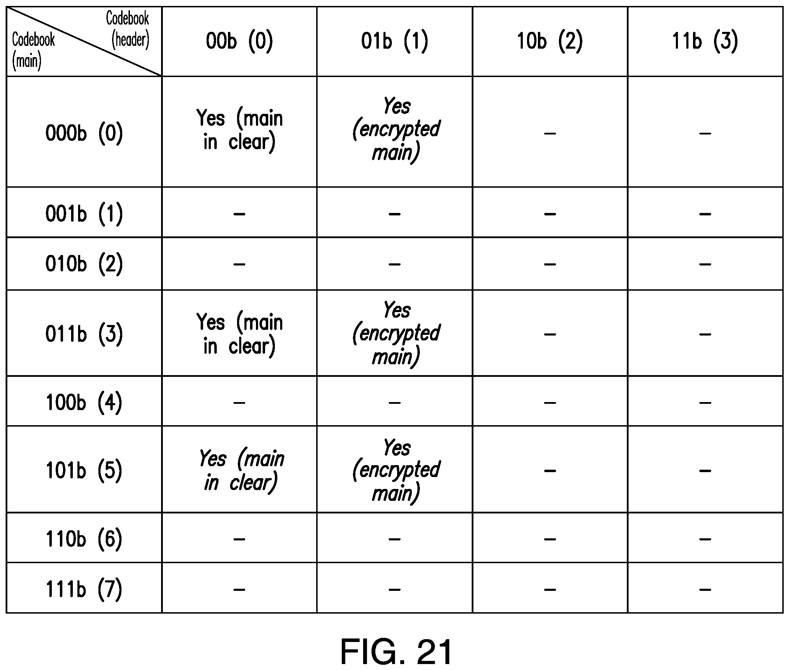

The main features of this UCAF Format 5 are shown in Figure 20, with a codebook summary shown in Figure 21. As shown in Figure 20, this UCAF Format 5 comprises a 5 byte header and a 16 byte main part. The header 2010 has five basic fields. The version field 2011 has 4 bits, and is here set to 0101 (5). The node identifier field 2012 has 10 bits, and so allows for 1024 nodes to be identified. The version field and the node identifier field will be used in message routing. The common header field 2013 comprises two subfields to identify particular information about the transaction - a first subfield 20131 identifies whether the token is identified by DPAN or by TUR - this is a single bit that is set to 0 for DPAN and 1 for TUR. The second subfield provides information about SCA (Strong Customer Authentication), as is required by PSD2 (for example) - this has 2 bits, and in this exemplary implementation the following values are used.

Table 1

| Value | Meaning | Significance |
|---|---|---|
| 00 | SCA not applicable | UCAF v0/v0+ will need to be produced through the v5 format - format of main will be 000 |
| 10 | SCA not performed | UCAF v3/v3+/v5 will need to be produced through the v5 format - format of main will be 011 or 101 |
| 11 | SCA performed | UCAF v3/v3+/v5 will need to be produced through the v5 format - format of main will be 011 or 101 |
| 01 | Reserved for future use (currently) | |

The codebook identifier field 2014 has two bits - identifying four possible codebooks - and these have an associated codebook content field 2015 of 21 bits. The main part 2020 has a simpler basic structure: a 3 bit codebook identifier 2021 and an 125 bit codebook content field 2022. The usage of these fields will be described in more detail below.

Figure 21 shows the codebook combinations currently used: header 00 can be used with main 000 (replicating v0 and v0+), main 011 (replicating v3 and v3+) and main 101 (simply using v5) in each case with the main in clear, whereas header 01 provides the same options with the main encrypted. As can be seen, this approach leaves twenty-four header and main combinations still available.

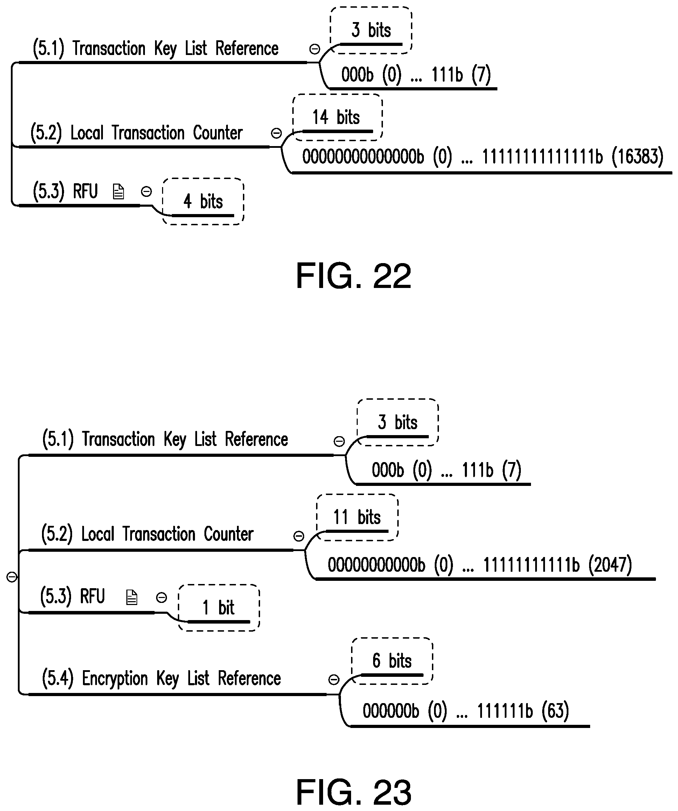

These eight codebooks - the two header codebooks and the six main codebooks currently used - are described in greater detail with reference to Figures 22 to 29.

Figures 22 and 23 indicate the two codebook options used for the header - codebook 00 supports a main part in clear, whereas codebook 01 supports a main part that is encrypted. Both have three bits for a transaction key list reference - both also provide bits for a local transaction counter and bits reserved for future use, but codebook 01 also reserves 6 bits for an encryption key reference. Codebook 01 therefore provides fewer bits for the local transaction counter and for future use than codebook 00 (11 bits as opposed to 14 bits for the local transaction counter, and 1 bit as opposed to 4 bits reserved for future use). Note that the bits reserved for future use may be used to expand capacity where required (for example for a key list reference or for the local transaction counter).

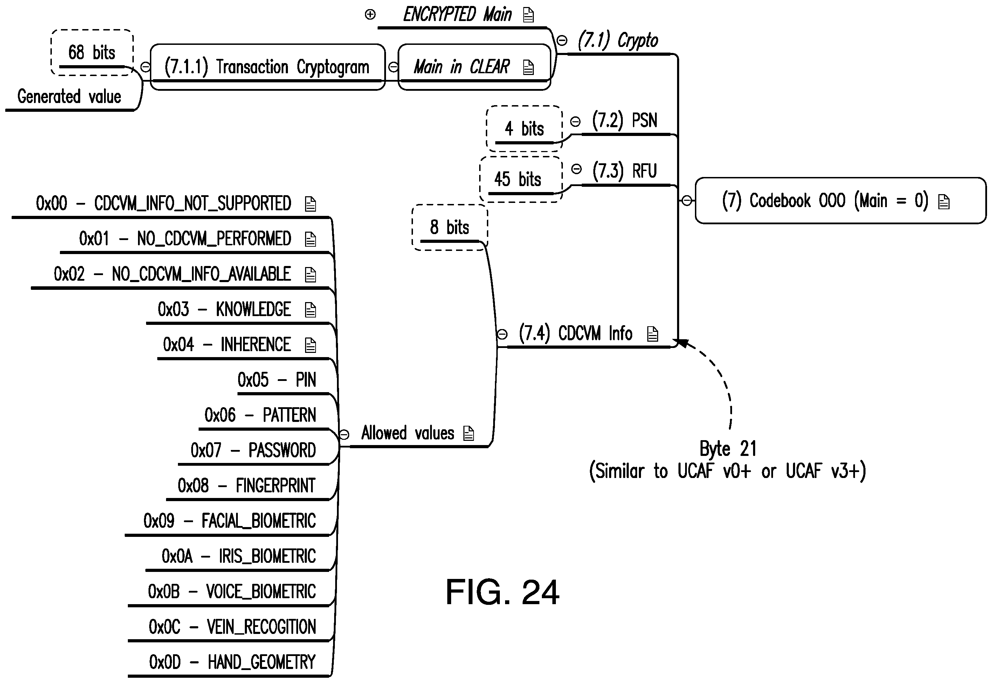

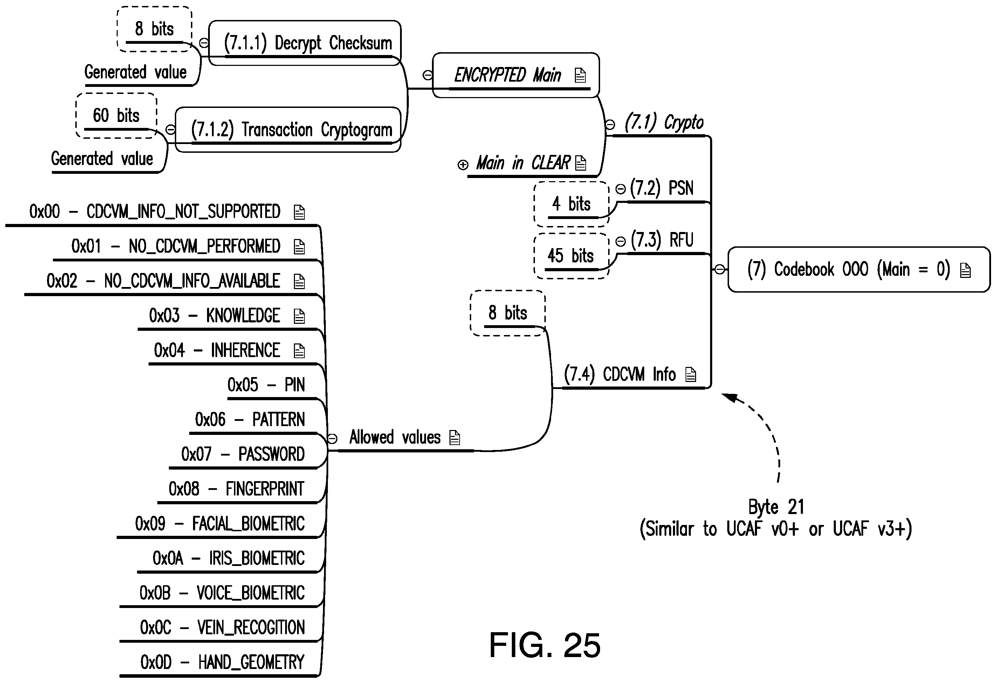

Greater differences are seen in the main parts. Figures 24 and 25 provide a main part that replicates UCAF Format 0/0+ information, with Figure 24 providing the clear version and Figure 25 providing the encrypted version (codebook 000 in each case). Both main parts have the same structure for transaction related information, including reservation of a byte ("byte 21") for CDCVM information (for the 0+ format). They also both reserve 4 bits for a PAN Sequence Number (PSN) and 45 bits for future use. The difference is in how the transaction cryptogram is held - for the clear case, this is held as a 68 bit value, whereas for the encrypted case, this is held as a 60 bit value with 8 bits reserved for a decrypt checksum.

In contrast to the decrypt checksum described above in relation to UCAF Format 6 in Figure 18, this checksum has 8 bits rather than 4. Here, the checksum is the leftmost 8 bits of a hash computed over the following:

- A. Header of UCAF v5 [5 bytes] including header codebook
- B. Codebook identifier (main) [3 bits]
- C. Codebook content (main) without decrypt checksum [117 bits] (including token PSN)
- D. Expiry Date (token) [2 bytes - BCD]
- E. DPAN or TUR (token) [n bytes]

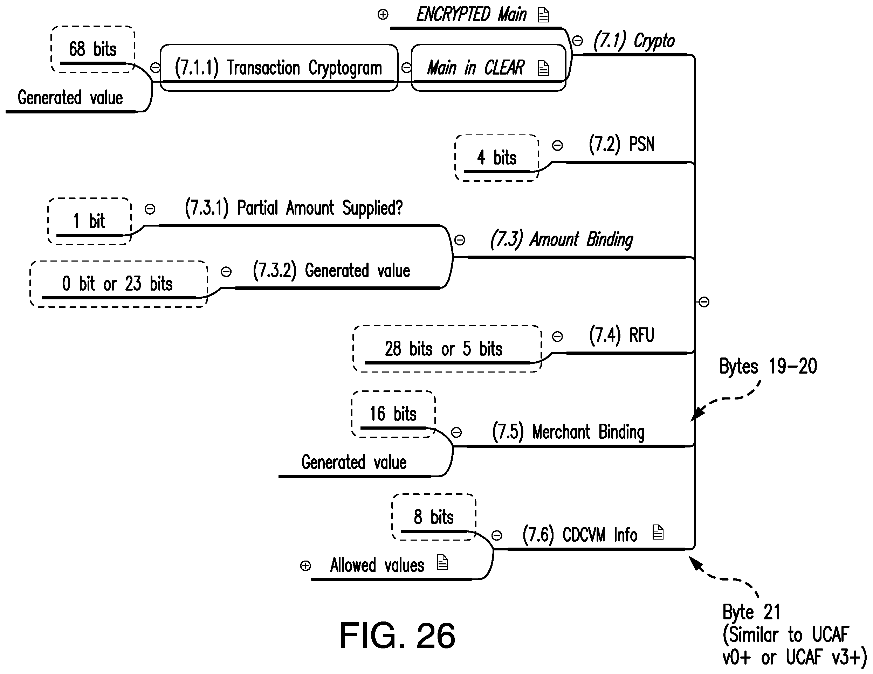

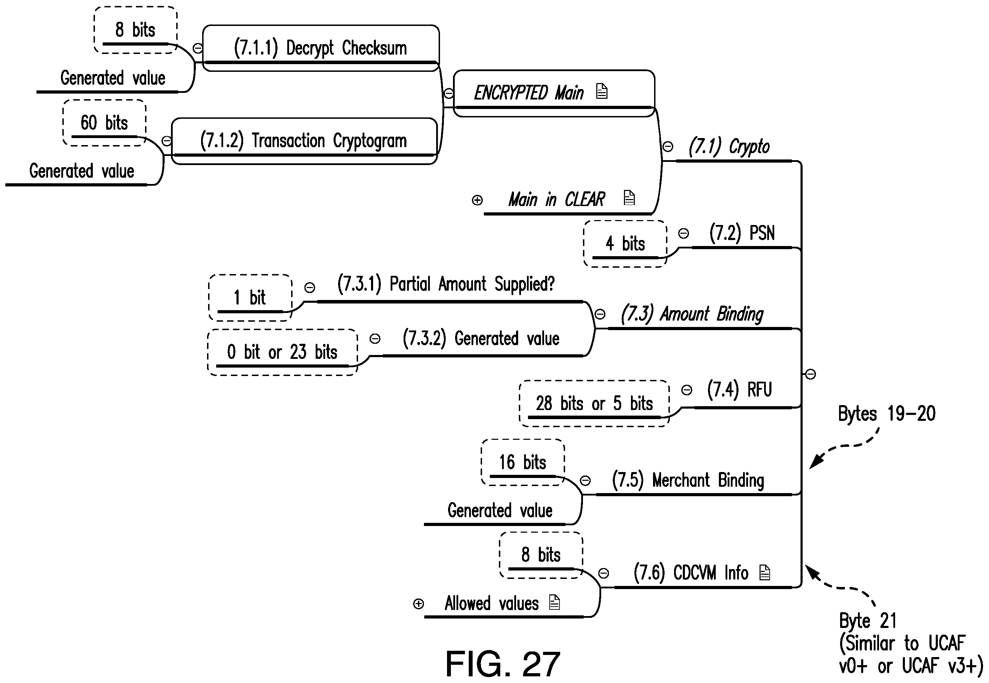

Figures 26 and 27 provide a main part that replicates UCAF Format 3/3+ information, with Figure 26 providing the clear version and Figure 25 providing the encrypted version (codebook 011 in each case). As before, both main parts have the same structure for transaction related information, though it is different from the Figure 24 and Figure 25 case. Here, there are 4 bits for PSN as before and 8 bits for CDCVM information including reservation of byte 21 for the + format. However, this time there is also an amount binding field (with a one-bit subfield to indicate whether a partial amount has been supplied, with 0 or 23 bits for a generated value) and a 16 bit merchant binding field (bytes 19 and 20 of the field) - there are either 28 or 5 bits reserved for use depending on whether a value is needed for the amount binding field. This allows UCAF Format 3/3+ replication. The holding of the cryptogram is as for the Figure 24 and Figure 25 case - for the clear case, this is held as a 68 bit value, whereas for the encrypted case, this is held as a 60 bit value with 8 bits reserved for a decrypt checksum.

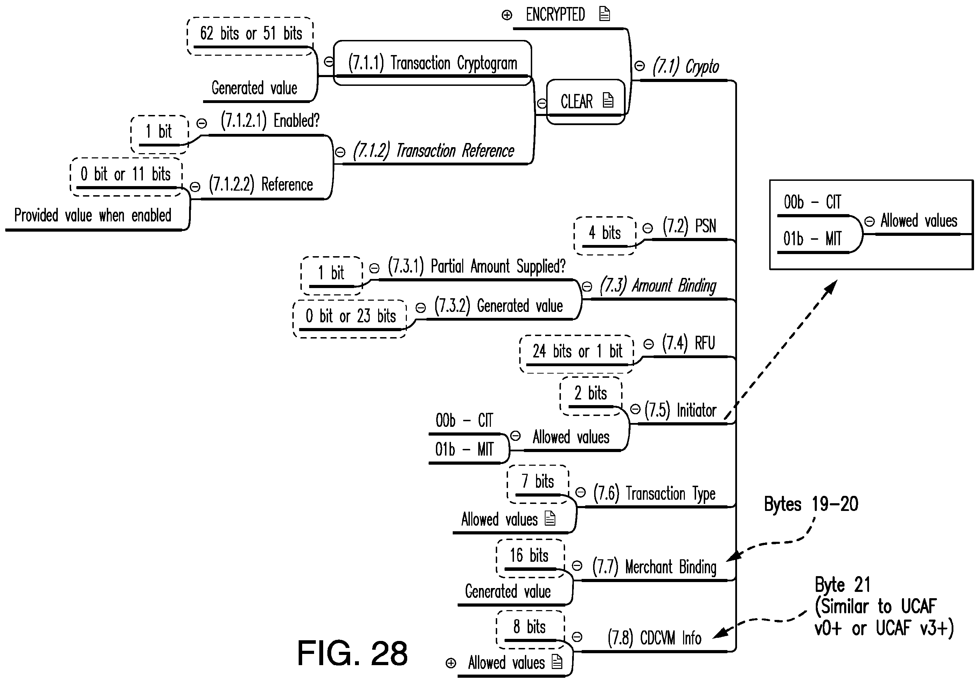

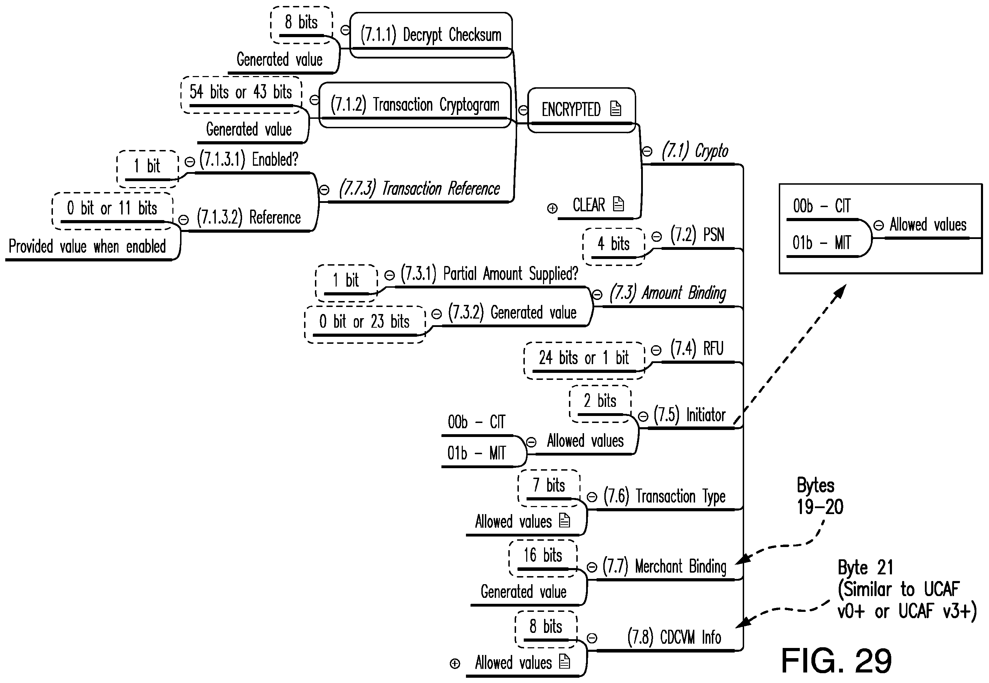

Figures 28 and 29 provide a main part with a "native" UCAF Format 5, with Figure 28 providing the clear version and Figure 29 providing the encrypted version (codebook 101 in either case). This approach allows for new information to be carried. In the main part, compared to the Figure 26 and Figure 27 case there is a new field provided for the transaction initiator (2 bits, with codes for CIT and MIT as the allowed values) and a new 7 bit field for transaction type. This can be implemented using the first two digits of the transaction processing code set out in ISO8583:1987 - this can be coded effectively with 7 bits, though the number of bits could be reduced further by using a translation table. An exemplary set of codes is shown in Table 2 below.

Table 2

| Transaction Class | Code | Specific Transaction Type |
|---|---|---|
| Cardholder Account Debits | 00 | Purchase |
| Cardholder Account Debits | 01 | Withdrawal |
| Cardholder Account Debits | 02 | Debit Adjustment |
| Cardholder Account Debits | 09 | Purchase with Cash Back |
| Cardholder Account Debits | 10 | (Visa only) Account Funding |
| Cardholder Account Debits | 17 | Cash Disbursement |
| Cardholder Account Debits | 18 | Scrip Issue |
| Cardholder Account Credits | 20 | Purchase Return/Refund |
| Cardholder Account Credits | 21 | Deposit |
| Cardholder Account Credits | 22 | Credit Adjustment |
| Cardholder Account Credits | 23 | Check Deposit Guarantee |
| Cardholder Account Credits | 24 | Check Deposit |
| Cardholder Account Credits | 28 | Payment Transaction |
| Cardholder Account Inquiries | 30 | Balance Inquiry |
| Cardholder Account Transfers | 40 | Account Transfer |

Another feature that is supported here is the use of a transaction reference - this may be used in routing (or to confirm routing), so it is desirable for this to be implemented in the header. 12 bits are provided for this - 1 to indicate whether this is enabled, and another 11 for the reference if used. These bits are taken from the space allocated to the transaction cryptogram, which drops to 62 bits at most in any event, to 51 bits when the reference is used but the main part is in clear (as shown in Figure 28), and by a further 8 bits (to 54 bits without a transaction reference and 43 bits with a transaction reference) in the main part encrypted case, where this is required for a decrypt checksum (as shown in Figure 29).

As noted above, this detailed example relates to establishment of a specific format - here UCAF Format 5 - to follow the principles set out in Figure 4 for providing multiple subformats, carrying different information, for the same common purpose but suitable for different services, with a codebook used to determine which subformat is employed in a specific example. The present disclosure is of course not limited to UCAF Format 5 - these design principles may be employed in relation to other transaction data formats, or for other formats for credentials for generation and validation for other purposes altogether.

The embodiments described in detail above relate particularly to the generation and validation of credentials, and the encryption and decryption of those credentials with other data, where both the credentials and the other data are used in financial transactions. Generation and validation of credentials, and encryption of credentials with other data, in this way is not limited to financial transactions - this approach may be used in any distributed system where it is necessary for one party to confirm that a legitimate action has been taken by another party, where the two parties may be accessing different nodes of the distributed system.

Aspects of the disclosure are described in the following clauses:

1. A method of providing a secure service at a computing node for a requesting party external to the computing node, the method comprising at the computing node:

receiving a service request from a requesting party, wherein the service request comprises a request to generate a credential;
determining from the service request service requirements of the requesting party;

generating the credential;

obtaining any further data to meet service requirements of the requesting party;

determining a credential data format to meet the service requirements and establishing a code value for the credential data format;

storing the code value, the credential and the further data in the credential data format, and

sending a message comprising the credential in the credential data format to the requesting party.

2. The method of clause 1, wherein the secure service is generation of a credential for a transaction for use in subsequent authorisation of that transaction.

3. A method of providing a secure service at a computing node for a requesting party external to the computing node, the method comprising at the computing node:

receiving a service request from a requesting party, wherein the service request comprises a request to validate a credential, wherein the credential is provided in a credential data format;

identifying the credential data format from a code value stored in the credential data format;

extracting the credential and further data relating to service requirements from the credential data format;

validating the credential; and

sending a messaging comprising a validation result to the requesting party.

4. The method of clause 3, wherein the secure service is validation of a credential for a transaction in authorisation of that transaction.

5. The method of any preceding clause, wherein the credential data format comprises a header part for routing and determining processing options for the credential, and a main part comprising the credential and data associated with the credential.

6. The method of clause 5, wherein the header part has two or more alternative formats, wherein the alternative formats are adapted to include different data, to store the same data in a different form, or both.

7. The method of clause 5 or clause 6, wherein the main part has two or more alternative formats, wherein the alternative formats are adapted to include different data, to store the same data in a different form, or both.

8. The method of any of clauses 5 to 7, wherein the credential data format comprises storing the main part in encrypted form.

9. The method of clause 8, wherein the header part comprises a decryption checksum for the credential and associated data.

10. Computing apparatus comprising network communication means, a memory and a programmed processor, wherein the processor is programmed to enable the computing apparatus to perform the method of any of clauses 1 to 9.

**Claims**

1. A method of providing a secure service at a computing node for a requesting party external to the computing node, the method comprising at the computing node:

receiving a service request from a requesting party, wherein the service request comprises a request to generate a credential;

generating the credential;

storing the credential in a credential data format, comprising a header part for routing and determining processing options for the credential, and an encrypted main part comprising the credential, data associated with the credential, and a decryption checksum, wherein the decryption checksum is calculated using information comprising data defining the credential data format; and

sending a message comprising the credential in the credential data format to the requesting party.

2. The method of claim 1, wherein the secure service is generation of a credential for a transaction for use in subsequent authorisation of that transaction.

3. A method of providing a secure service at a computing node for a requesting party external to the computing node, the method comprising at the computing node:

   receiving a service request from a requesting party, wherein the service request comprises a request to validate a credential, wherein the credential is provided in a credential data format comprising a header part for routing and determining processing options for the credential, and a main part comprising the credential, data associated with the credential, and a decryption checksum;
   identifying the credential data format and establishing processing options for the credential;
   decrypting the main part and extracting the credential, the data associated with the credential and the decryption checksum;
   validating the decryption checksum to determine that the credential has been provided legitimately in the credential data format;
   validating the credential; and
   sending a messaging comprising a validation result to the requesting party.

4. The method of claim 3, wherein the secure service is validation of a credential for a transaction in authorisation of that transaction.

5. The method of any preceding claim, wherein there are multiple credential data formats, and wherein the header identifies the credential data format used.

6. The method of claim 5, wherein the decryption checksum is calculated using information including an identifier of the credential data format used.

7. The method of any preceding claim dependent on claim 2 or claim 4, wherein the decryption checksum is calculated using an account number or token reference of a token used to conduct the transaction and an expiry date of the token.

8. Computing apparatus comprising network communication means, a memory and a programmed processor, wherein the processor is programmed to enable the computing apparatus to perform the method of any of claims 1 to 7.

FIG. 1

FIG. 2

FIG. 3

FIG. 4

FIG. 5

FIG. 6

FIG. 7

EP 4 625 890 A2

**Legend:**

$N_i$ Node

AC Access Control

G Generate

V Validate

K Key Management

M Monitor

# FIG. 8

FIG. 9

FIG. 10

FIG. 11

FIG. 12

EP 4 625 890 A2

9F6EBEE120A9CB96
84B3DA12FE7DDF0C

7E8E1BEB22B9DE02
9F29C4C8F227C07A

16702EED177646ED
ED1AF510FE40FFD6

8FEB12E02F4EB7AA
7ED6337CC7BF071B

1EAE47824BE75ECD
F1862F2BDDDD270D0

K

G G

$N_i$

V V V

Key list "A" with 10 entries in *KeyIds*

*Identifier* 0d51839f−a66a−4fb8−8395−e88e45b447cb

(0, 🔑), (1, 🔑), (2, 🔑), (3, 🔑), (4, 🔑)

(5, 🔑), (6, 🔑), (7, 🔑), (8, 🔑), (9, 🔑)

Key list "B" with 10 entries in *KeyIds*

*Identifier* 515f3fea−337d−41ee−8681−b90af4d84071

(0, 🔑), (1, 🔑), (2, 🔑), (3, 🔑), (4, 🔑)

(5, 🔑), (6, 🔑), (7, 🔑), (8, 🔑), (9, 🔑)

= Seal

FIG. 13

EP 4 625 890 A2

$N_i$ ⇨ G ⇨ KLi ⇨ Token ⇨ LTC

⇩ getId

id

⇩

label

⇩

keyId

Use info from key list KLi...

HSM configuration

FIG. 14

In

Out

- ○ HMAC-SHAxxx-yyy (yyy=leftmost truncation)
- ○ xxx=256,512... with yyy=128,256...

HMAC-SHA256-128

Data

xyz – keyId

Full Cryptogram
(HMAC-SHA256)
or
Truncated
Cryptogram

(HMAC-SHA256-128)

X or 16 bytes

**Legacy Use Case** L

- ○ Take leftmost 1 byte
- ○ Decimalization to 2 digits
- ○ Verification process is generate HMAC (HSM) followed by a compare of decimalized value in software

L

CVC2

X/16 bytes → 1 byte → 2 digits

**UCAF Use Case** U

- ○ Take leftmost 8 bytes
- ○ May be able to use standard verify function from HSM

U

Truncated
Cryptogram

X/16 bytes → 8 bytes

**DPD Use Case** D

- ○ Take leftmost 16 bytes
- ○ Should be able to use standard verify function from HSM

D

"Full" Truncated
Cryptogram

X/16 bytes → 16 bytes

FIG. 15

EP 4 625 890 A2

Key list "A" with 10 entries in *KeyIds*

*Identifier* 0d51839f-a66a-4fb8-8395-e88e45b447cb

(0, 🔑), (1, 🔑), (2, 🔑), (3, 🔑), (4, 🔑),
(5, 🔑), (6, 🔑), (7, 🔑), (8, 🔑), (9, 🔑)

FIG. 16

FIG. 17

DXD powered by NODES
(UCAF Format 6)

● UCAF Format 6 (21 bytes) — 241 — 2411

| | |
|---|---|
| – Version (4 bits) | Version identification (0110b) |

— 2412

| | |
|---|---|
| – Node Identifier (6 bits)<br>– Transaction Key List Reference (2 bits)<br>– Encryption Key List Reference (6 bits) | Node (technical) identification |

2413

2414

2413

| | |
|---|---|
| – Local Transaction Counter (8 bits) | Transaction identification by G |

2414

| | |
|---|---|
| – Merchant ID Hash (Part 1) (13 bits) | Merchant binding |

| Reserved for future use | – RFU (1 bit – in clear data) |
|---|---|

| Data protection | – <u>Encrypted Data</u> (16 bytes) |
|---|---|

— 2421

— 2423

| | |
|---|---|
| ● Merchant ID Hash (Part 2) (3 bits) | |
| ● SCA Flag (1 bit) | SCA binding |
| ● Approximate Amount (23 bits) | Amount binding |

| | |
|---|---|
| ● PAN (63 bits)<br>● PSN (4 bits)<br>● Partial Expiry Date (7 bits) | Account mapping information |

— 2425

| | ● RFU (1 bit – in encrypted data) |
|---|---|

| Transaction integrity | ● Transaction Cryptogram (22 bits) |
|---|---|

— 2422

| Decrypt Checksum | ● Decrypt Checksum (4 bits) |
|---|---|

— 2426

— 242

FIG. 18

EP 4 625 890 A2

FIG. 19

**FIG. 20**

EP 4 625 890 A2

| Codebook (main) \ Codebook (header) | 00b (0) | 01b (1) | 10b (2) | 11b (3) |
|---|---|---|---|---|
| 000b (0) | Yes (main in clear) | Yes (encrypted main) | – | – |
| 001b (1) | – | – | – | – |
| 010b (2) | – | – | – | – |
| 011b (3) | Yes (main in clear) | Yes (encrypted main) | – | – |
| 100b (4) | – | – | – | – |
| 101b (5) | Yes (main in clear) | Yes (encrypted main) | – | – |
| 110b (6) | – | – | – | – |
| 111b (7) | – | – | – | – |

FIG. 21

EP 4 625 890 A2

(5.1) Transaction Key List Reference ⊖

3 bits

000b (0) ... 111b (7)

(5.2) Local Transaction Counter ⊖

14 bits

00000000000000b (0) ... 11111111111111b (16383)

(5.3) RFU 📄 ⊖

4 bits

## FIG. 22

(5.1) Transaction Key List Reference ⊖

3 bits

000b (0) ... 111b (7)

(5.2) Local Transaction Counter ⊖

11 bits

00000000000b (0) ... 11111111111b (2047)

(5.3) RFU 📄 ⊖

1 bit

(5.4) Encryption Key List Reference ⊖

6 bits

000000b (0) ... 111111b (63)

## FIG. 23

⊕ *ENCRYPTED Main* 📄

68 bits — (7.1.1) Transaction Cryptogram — *Main in CLEAR* 📄 ⊖ *(7.1) Crypto*

Generated value

4 bits — ⊖ (7.2) PSN

45 bits — ⊖ (7.3) RFU — (7) Codebook 000 (Main = 0) 📄

8 bits

0x00 – CDCVM_INFO_NOT_SUPPORTED 📄
0x01 – NO_CDCVM_PERFORMED 📄
0x02 – NO_CDCVM_INFO_AVAILABLE 📄
0x03 – KNOWLEDGE 📄
0x04 – INHERENCE 📄
0x05 – PIN
0x06 – PATTERN
0x07 – PASSWORD — Allowed values 📄 ⊖ (7.4) CDCVM Info 📄
0x08 – FINGERPRINT
0x09 – FACIAL_BIOMETRIC
0x0A – IRIS_BIOMETRIC
0x0B – VOICE_BIOMETRIC
0x0C – VEIN_RECOGITION
0x0D – HAND_GEOMETRY

Byte 21
(Similar to UCAF v0+ or UCAF v3+)

FIG. 24

EP 4 625 890 A2

8 bits — ⊖ (7.1.1) Decrypt Checksum

Generated value

60 bits — ⊖ (7.1.2) Transaction Cryptogram

Generated value

*ENCRYPTED Main* 🗎 — ⊖ *(7.1) Crypto*

⊕ *Main in CLEAR* 🗎

0x00 – CDCVM_INFO_NOT_SUPPORTED 🗎

0x01 – NO_CDCVM_PERFORMED 🗎

0x02 – NO_CDCVM_INFO_AVAILABLE 🗎

0x03 – KNOWLEDGE 🗎

0x04 – INHERENCE 🗎

0x05 – PIN

0x06 – PATTERN

0x07 – PASSWORD — ⊖ Allowed values 🗎

0x08 – FINGERPRINT

0x09 – FACIAL_BIOMETRIC

0x0A – IRIS_BIOMETRIC

0x0B – VOICE_BIOMETRIC

0x0C – VEIN_RECOGITION

0x0D – HAND_GEOMETRY

4 bits ⊖ (7.2) PSN

45 bits ⊖ (7.3) RFU

8 bits

(7.4) CDCVM Info 🗎

⊖ (7) Codebook 000 (Main = 0) 🗎

Byte 21
(Similar to UCAF v0+ or UCAF v3+)

FIG. 25

ENCRYPTED Main 📄 ⊕

(7.1.1) Transaction Cryptogram — Main in CLEAR 📄 — ⊖ (7.1) Crypto

68 bits
Generated value

4 bits — ⊖ (7.2) PSN

1 bit — ⊖ (7.3.1) Partial Amount Supplied?

0 bit or 23 bits — ⊖ (7.3.2) Generated value

⊖ (7.3) Amount Binding

28 bits or 5 bits — ⊖ (7.4) RFU

16 bits — ⊖ (7.5) Merchant Binding
Generated value

8 bits — ⊖ (7.6) CDCVM Info 📄
Allowed values 📄 ⊕

Bytes 19–20

Byte 21
(Similar to UCAF
v0+ or UCAF v3+)

FIG. 26

EP 4 625 890 A2

FIG. 27

EP 4 625 890 A2

⊕ ENCRYPTED 📄

62 bits or 51 bits

Generated value

⊖ (7.1.1) Transaction Cryptogram

CLEAR 📄

⊖ (7.1) Crypto

1 bit ⊖ (7.1.2.1) Enabled?

⊖ (7.1.2) Transaction Reference

0 bit or 11 bits ⊖ (7.1.2.2) Reference

Provided value when enabled

4 bits ⊖ (7.2) PSN

00b — CIT

01b — MIT ⊖ Allowed values

1 bit ⊖ (7.3.1) Partial Amount Supplied?

⊖ (7.3) Amount Binding

0 bit or 23 bits ⊖ (7.3.2) Generated value

24 bits or 1 bit ⊖ (7.4) RFU

2 bits ⊖ (7.5) Initiator

00b — CIT

01b — MIT ⊖ Allowed values

7 bits ⊖ (7.6) Transaction Type

Allowed values 📄

Bytes 19–20

16 bits ⊖ (7.7) Merchant Binding

Generated value

8 bits ⊖ (7.8) CDCVM Info

Byte 21
(Similar to UCAF
v0+ or UCAF v3+)

⊕ Allowed values 📄

FIG. 28

FIG. 29

**EP 4 625 890 A2**

**Patent documents cited in the description**

- WO 2022046330 A1
- WO 2020247093 A1
- WO 2017004391 A1
- EP 19178579
- WO 2022250716 A1